(19) Europäisches Patentamt
European Patent Office
Office européen des brevets

(11) EP 4 424 742 A1

(12) **EUROPEAN PATENT APPLICATION**
published in accordance with Art. 153(4) EPC

(43) Date of publication:
**04.09.2024 Bulletin 2024/36**

(21) Application number: **22887496.2**

(22) Date of filing: **21.10.2022**

(51) International Patent Classification (IPC):
***C08G 63/16*** *(2006.01)* ***C08G 63/181*** *(2006.01)*
***C08K 5/12*** *(2006.01)* ***C08L 67/02*** *(2006.01)*
***C08L 1/02*** *(2006.01)* ***C08J 5/18*** *(2006.01)*

(52) Cooperative Patent Classification (CPC):
**C08G 63/16; C08G 63/181; C08J 5/18; C08K 5/12; C08L 1/02; C08L 67/02;** Y02W 90/10

(86) International application number:
**PCT/KR2022/016107**

(87) International publication number:
**WO 2023/075300 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2021 KR 20210143107**

(71) Applicant: **SK leaveo Co., Ltd.**
**Gyeonggi-do 16338 (KR)**

(72) Inventors:
- **KIM, Kyung Youn**
  **Suwon-si, Gyeonggi-do 16338 (KR)**
- **KIM, Seong Dong**
  **Suwon-si, Gyeonggi-do 16338 (KR)**
- **KIM, Hoon**
  **Suwon-si, Gyeonggi-do 16338 (KR)**

(74) Representative: **Dehns**
**St. Bride's House**
**10 Salisbury Square**
**London EC4Y 8JD (GB)**

(54) **BIODEGRADABLE POLYESTER RESIN, MANUFACTURING METHOD THEREFOR, AND BIODEGRADABLE POLYESTER FILM INCLUDING SAME**

(57) The present invention relates to a biodegradable polyester resin, a manufacturing method therefor, and a biodegradable polyester film, wherein the biodegradable polyester resin includes: a first repeat unit containing a first diol residue and a residue of aromatic dicarboxylic acid; a second repeat unit containing a second diol residue and a residue of aliphatic dicarboxylic acid residue; and a specific content of a softening agent, composed of a specific ingredient. The biodegradable polyester resin contains the softening agent at a specific content and thus can maximize flexibility while maintaining appropriate mechanical strength, and can satisfy excellent heat resistance and moldability at the same time. Therefore, the resin can be used in a wider variety of fields including packing materials, garbage bags, mulching films and disposable products, wrap films requiring high flexibility, industrial stretch films, molding films, lamination of building interior materials, and applications requiring cubical molding such as 3D molding.

[Fig. 1]

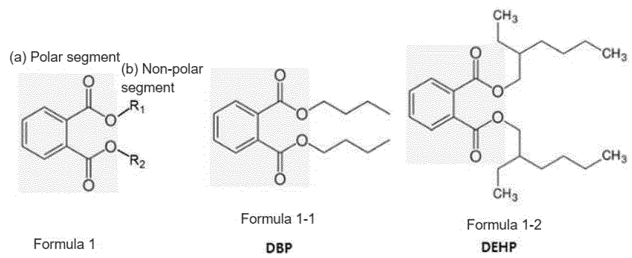


Formula 1

Formula 1-1
**DBP**

Formula 1-2
**DEHP**

EP 4 424 742 A1

## Description

### Technical Field

The present invention relates to a biodegradable polyester resin, to a process for preparing the same, and to a biodegradable polyester film comprising the same.

### Background Art

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.

In order to solve these problems, studies on biodegradable polymers are being actively conducted.

Used as the biodegradable resin are polybutylene adipate terephthalate (PBAT), polylactic acid (PLA), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and polybutylene succinate (PBS). In particular, they are used for various purposes such as disposable packaging materials, envelopes, mulching films, straws, and trays.

However, since these biodegradable polymers have limitations in flexibility, their use in wrap films, industrial stretch films, or molding films that still require high flexibility is limited.

Specifically, the biodegradable polymers are used to make biodegradable films or molded articles by mixing them at a certain ratio to enhance flexibility suitable for the application. However, it is difficult to be used in the fields where high flexibility is required, since the modulus is too high. There are problems with poor formability and thermal resistance, resulting in a thin forming depth and appearance defects.

[Prior Art Document]

[Patent Document]

(Patent Document 1) Korean Laid-open Patent Publication No. 2014-0106882

### Detailed Description of the Invention

### Technical Problem

An object of the present invention is to provide a polyester resin that has excellent mechanical properties, as well as excellent flexibility and thermal resistance, and is capable of enhancing formability, processability, and productivity at the same time, and a process for preparing the same.

Another object of the present invention is to provide a biodegradable polyester film and an environmentally friendly molded article that are excellent in biodegradability while achieving excellent physical properties as described above using the polyester resin.

### Solution to the Problem

The present invention provides a biodegradable polyester resin that comprises a first repeat unit comprising a first diol residue and an aromatic dicarboxylic acid residue and a second repeat unit comprising a second diol residue and an aliphatic dicarboxylic acid residue; and a softener represented by the following Formula 1 in an amount of 50 ppm to 800 ppm:

[Formula 1]

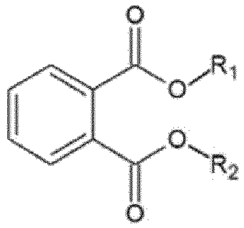

in Formula 1, $R_1$ and $R_2$ are each independently a substituted or unsubstituted $C_2$-$C_{10}$ alkyl group.

In addition, the present invention provides a process for preparing a biodegradable polyester resin that comprises a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by the above Formula 1 in an amount of 50 ppm to 800 ppm.

In addition, the present invention provides a biodegradable polyester film that comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by the above Formula 1 in an amount of 50 ppm to 800 ppm.

## Advantageous Effects of the Invention

As the biodegradable polyester resin of the present invention comprises a first repeat unit comprising a first diol residue and an aromatic dicarboxylic acid residue and a second repeat unit comprising a second diol residue and an aliphatic dicarboxylic acid residue; and a specific amount of a softener composed of a specific component, it has excellent mechanical properties and thermal resistance, as well as high flexibility, and is capable of enhancing formability, processability, and productivity at the same time.

In addition, the biodegradable polyester resin and a biodegradable sheet or film comprising the same have an advantage in that they can be expanded to a variety of applications such as packaging materials, garbage bags, mulching films, and disposable products that require excellent durability and elongation at break, as well as lap films, industrial stretch films, molding films, lamination of architectural interiors, and applications requiring three-dimensional molding such as 3D molding that requires high flexibility.

Meanwhile, in the process for preparing a biodegradable polyester resin according to an embodiment, the softener is added during the polymerization of the biodegradable polyester resin, for example, during the esterification reaction, during the polycondensation reaction, or both, whereby the softener can be copolymerized with the polymer units and can be stably plasticized in the molecules, thereby maximizing the flexibility of the biodegradable polyester resin and further enhancing the overall physical properties.

## Brief Description of the Drawing

Fig. 1 schematically shows the chemical structure of a softener contained in a biodegradable polyester resin according to an embodiment.

Fig. 2 schematically shows the process for preparing a biodegradable polyester resin according to an embodiment.

Fig. 3a is a side view before the pressing of a thermoforming press used to measure the forming depth of a biodegradable polyester film according to an embodiment.

Fig. 3b is a side view after the pressing of a thermoforming press used to measure the forming depth of a biodegradable polyester film according to an embodiment.

Fig. 4 is a plan view of the lower plate of a thermoforming press used to measure the forming depth of a biodegradable polyester film according to an embodiment.

## Best Mode for Carrying out the Invention

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In an embodiment of the present invention, there is provided a biodegradable polyester resin, which comprises a first repeat unit comprising a first diol residue and an aromatic dicarboxylic acid residue and a second repeat unit comprising a second diol residue and an aliphatic dicarboxylic acid residue; and a softener represented by the above Formula 1 in an amount of 50 ppm to 800 ppm.

According to an embodiment of the present invention, as the biodegradable polyester resin comprises a first repeat unit comprising a first diol residue and an aromatic dicarboxylic acid residue and a second repeat unit comprising a second diol residue and an aliphatic dicarboxylic acid residue, it has excellent mechanical strength and flexibility at the same time. As it comprises the softener in a specific amount, the Young's modulus and $F_{100}$ are further reduced, the elongation at break is further increased, and the pinhole resistance and forming depth are adjusted to maximize flexibility. Such composite properties as post-workability (PW) and thermal resistance ductility complexity (TRDC) obtained by controlling these properties in combination can be achieved at an optimal level.

In addition, the technical significance lies in that when a biodegradable polyester sheet, film, or molded article comprising the biodegradable polyester resin is prepared, stretching is well carried out, and formability is improved, whereby formability, processability, and productivity can be further enhanced.

Furthermore, in the preparation of a biodegradable polyester film using the biodegradable polyester resin, a blown film process is a very important production process. In such a blown film process, a bubble is well formed, and a final product can be prepared without the fusion of the film surfaces during winding, whereby productivity, processability, and formability can be enhanced at the same time. Therefore, it can be expanded to various applications such as lap films, industrial stretch films, molding films, lamination of architectural interiors, and applications requiring three-dimensional molding such as 3D molding that requires high flexibility.

Hereinafter, the biodegradable polyester resin will be described in more detail.

### Biodegradable polyester resin

The biodegradable polyester resin according to an embodiment of the present invention comprises a first repeat unit comprising a first diol residue and an aromatic dicarboxylic acid residue and a second repeat unit comprising a second diol residue and an aliphatic dicarboxylic acid residue.

The first and second diol residues each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, sebacic acid, or a derivative thereof.

The biodegradable polyester resin having the above configuration may enhance the biodegradability, water degradability, and physical properties of a biodegradable polyester sheet, film, or molded article prepared from the same.

The first and second diol residues may each comprise a residue of 1,4-butanediol, 1,2-ethanediol, 1,3-propanediol, or a derivative thereof, specifically, 1,4-butanediol, 1,2-ethanediol, or a derivative thereof, more specifically, 1,4-butanediol or a derivative thereof. For example, when the first and second diol residues each comprise 1,4-butanediol, it may be more advantageous for the enhancement in the biodegradability, water degradability, and physical properties of the biodegradable polyester resin or a biodegradable polyester sheet, film, or molded article prepared from the same.

In addition, when the first and second diol residues each comprise the above residue, the aromatic dicarboxylic acid and the aliphatic dicarboxylic acid can be more uniformly reacted with the diol components according to the preparation process of the present invention, and the reaction efficiency can be increased; thus, it may be more advantageous for preparing a biodegradable polyester resin having the above physical properties.

The biodegradable polyester resin according to an embodiment of the present invention may comprise a first repeat unit comprising a residue of 1,4-butanediol or a derivative thereof and a residue of terephthalic acid or a derivative thereof; and a second repeat unit comprising a residue of 1,4-butanediol or a derivative thereof and a residue of adipic acid or a derivative thereof. When the first repeat unit and the second repeat unit satisfy the above configurations, it

may be more advantageous for providing a biodegradable polyester sheet or film having excellent biodegradability and water degradability.

Meanwhile, in order to provide a biodegradable polyester resin with excellent productivity, processability, and formability and to simultaneously enhance the biodegradability and water degradability of a biodegradable polyester sheet or film prepared from the same, it is very important to control the number of repeat units that constitute the biodegradable polyester resin.

The number of the first repeat unit may be 90 to 500, 90 to 400, 90 to 300, 90 to 200, 90 to 150, 90 to 140, 90 to 130, 90 to 120, 100 to 120, or 100 to 115.

The number of the second repeat unit may be 50 to 500, 50 to 400, 50 to 300, 50 to 200, 50 to 150, 55 to 120, 60 to 150, 60 to 130, 60 to 120, 80 to 150, 90 to 150, 95 to 150, 96 to 150, 96 to 130, 96 to 120, or 98 to 120.

If the number of the first repeat unit and the number of the second repeat unit each satisfy the above ranges, it is possible to achieve the desired molecular weight of the biodegradable polyester resin, to enhance the processability and physical properties, and to further enhance the mechanical properties, thermal resistance, and biodegradability of a biodegradable polyester sheet, film, or molded article prepared from the same. If the number of the first repeat unit and/or the second repeat unit is too small, the molecular weight of the biodegradable polyester resin is also reduced, making it difficult to achieve the desired physical properties.

In addition, according to an embodiment of the present invention, the ratio (X/Y) of the number of the first repeat unit (X) to the number of the second repeat unit (Y) may be 0.6 to 2.5. Specifically, the ratio (X/Y) of the number of the first repeat unit (X) to the number of the second repeat unit (Y) may be 0.7 to 2.5, 0.7 to 2.4, 0.7 to 2.3, 0.7 to 2.0, 0.7 to 1.8, 0.7 to 1.7, 0.8 to 1.6, 0.8 to 1.5, 0.8 to 1.4, 0.8 to 1.3, 0.8 to 1.2, 0.8 to 1.1, 0.8 to 1.0, 0.9 to 1.0, greater than 0.9 to 1.0, or greater than 0.9 to less than 1.0.

If the ratio (X/Y) of the number of the first repeat unit (X) to the number of the second repeat unit (Y) is less than the above range, the mechanical properties and flexibility may be decreased, and the stickiness may be increased, thereby deteriorating the processability. In particular, the blow moldability in a blown film process may be deteriorated, for example, the bubble is not properly shaped, is stretched to one side to be oblique, or bursts. In addition, after 3 months, a biodegradable polyester sheet or film prepared from the biodegradable polyester resin may have a significantly low water degradability reduction rate, so that the biodegradability may be deteriorated under seawater biodegradation or humid conditions.

Meanwhile, the biodegradable polyester resin according to an embodiment of the present invention comprises a softener represented by the following Formula 1.

[Formula 1]

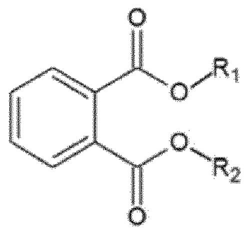

In Formula 1, $R_1$ and $R_2$ are each independently a substituted or unsubstituted $C_2$-$C_{10}$ alkyl group.

Specifically, in Formula 1, $R_1$ and $R_2$ are each independently a substituted or unsubstituted $C_2$-$C_8$ alkyl group. In addition, in Formula 1, $R_1$ and $R_2$ are each independently a substituted or unsubstituted $C_4$-$C_8$ alkyl group.

More specifically, in Formula 1, $R_1$ and $R_2$ are each independently a $C_2$-$C_8$ or $C_4$-Cs alkyl group substituted with a $C_1$-$C_6$, $C_1$-$C_4$, or $C_2$-$C_4$ alkyl group.

Alternatively, in Formula 1, $R_1$ and $R_2$ are each independently an unsubstituted $C_2$-Cs or $C_4$-$C_8$ alkyl group.

For example, the softener represented by Formula 1 may comprise a phthalate-based compound. Specifically, the softener represented by Formula 1 is one or more selected from the group consisting of diethylhexyl phthalate (DEHP) (Formula 1-2 in Fig. 1) and dibutyl phthalate (DBP) (Formula 1-1 in Fig. 1).

Meanwhile, referring to Fig. 1, the softener represented by Formula 1 comprises a polar segment (a) (gray shaded part in Fig. 1) bonded to the polymer chains and a non-polar segment (b) that provides flexibility by broadening the spacing of the polymer chains (the part excluding the gray shaded part in Fig. 1).

That is, as the softener represented by Formula 1 comprises the non-polar segment (b), it acts as a lubricant between polymers to loosen the chains between the polymers. At the same time, as the softener comprises the polar segment (a), it may be inserted into the polymer chains as a side chain to be combined with the polymer chains.

In addition, in general, a biodegradable polyester resin, such as polybutylene adipate terephthalate (PBAT),

that does not comprise a softener is flexible in its nature. However, in order to be used as lap films, industrial stretch films, molding films, lamination of architectural interiors, and applications requiring three-dimensional molding such as 3D molding that requires high flexibility, it is necessary to maximize flexibility while maintaining an appropriate level of strength.

However, if an epoxy-based or aliphatic dibasic acid-based compound, other than the softener represented by Formula 1, is used as a softener, it is effective in enhancing strength, whereas flexibility is reduced, thereby reducing forming depth and elongation at break; or, conversely, flexibility is enhanced whereas strength may steeply decrease or pinhole resistance may decrease. Further, such composite physical properties as post-workability (PW) and thermal resistance ductility complexity (TRDC), which are obtained by controlling the above properties in combination, may also decrease.

As the biodegradable polyester resin according to an embodiment of the present invention comprises a softener of Formula 1, it acts as a lubricant for the resin and creates chains between the polymers, thereby increasing the number and length of polymer branch chains. In addition, as the softener is inserted as a side chain branch into the weak parts between the linear chains, it has little impact on the changes in modulus, tensile strength, and thermal shrinkage rate; thus, it is possible to further reduce Young's modulus and $F_{100}$, further increase elongation at break, and adjust pinhole resistance and forming depth, without impairing their effects. Therefore, it is possible to achieve high flexibility while maintaining an appropriate level of mechanical properties and thermal resistance. It has a significant feature in that, as a result, formability, processability, and productivity can be enhanced at the same time.

According to an embodiment of the present invention, the softener represented by Formula 1 is not compounded with the biodegradable polyester resin by mixing; rather, it is added during the polymerization of the biodegradable polyester resin, for example, during the esterification reaction, during the polycondensation reaction, or both, whereby the polymer units and the softener represented by Formula 1 can be copolymerized, and it can be stably plasticized in the molecules, thereby effectively achieving the effect desired in the present invention.

Specifically, the softener represented by Formula 1 may be added during the esterification reaction step, during the polycondensation reaction step, or both, to participate in the reaction.

In such a case, (i) the softener represented by Formula 1 is copolymerized with the polymer units of the resin, so that a slight bonding force between the softener and the resin molecules may exist, and the softener acts as a lubricant between the polymers for the resistance to deformation of the resin caused by intermolecular friction, thereby facilitating processability; (ii) the softener dissolves or swells the connection points of the polymer to resist the deformation of the resin generated from the inside of the three-dimensional cross-structure, thereby facilitating the fluidity of the resin. Further, (iii) the free volume can be increased due to an increase in the number and length of the polymer branch chains of the resin or due to small intermolecular attraction, and the increase in free volume due to a low molecular weight compound having compatibility can further increase flexibility.

In addition, in the polyester resin, the softener can be inserted as side chains, both ends, or random branches of the copolymer to form a random copolymer, thereby maximizing the flexibility of the polyester resin and further enhancing the overall physical properties.

In addition, since the softener of Formula 1 imparts flexibility, it can lower the melting temperature to change the polyester resin into a softer and tougher material. For example, the difference (ΔMT) between the melting temperature ($MT_0$) of a polyester resin without the softener represented by Formula 1 and the melting temperature (MTi) of a polyester resin comprising the softener represented by Formula 1 may be about 5 to 35°C. That is, when the softener represented by Formula 1 is employed, it is possible to lower the melting temperature by 5 to 35°C relative to a polyester resin that does not comprise the softener.

Meanwhile, the softener represented by Formula 1 may have a weight average molecular weight (Mw) of, for example, 200 to 600 g/mole, for example, 200 to 500 g/mole, or, for example, 200 to 450 g/mole.

In addition, the softener represented by Formula 1 may have a polarity of, for example, 7 to 22, for example, 10 to 22, for example, 12 to 22, for example, 15 to 22, for example, 18 to 22, or, for example, 18 to 20. The polarity may be measured by HANSEN SOLUBILITY PARAMETER (HSP) or the like.

In addition, the softener represented by Formula 1 may have a density of, for example, 0.5 to 1.5 g/mL, for example, 0.5 to 1.3 g/mL, for example, 0.7 to 1.3 g/mL, or, for example, 0.8 to 1.2 g/mL.

The softener represented by Formula 1 may have a boiling point (b.p.) of, for example, 250°C to 500°C, for example, 300°C to 500°C, for example, 300°C to 450°C, or, for example, 320°C to 420°C.

The softener represented by Formula 1 may have a melting point (m.p.) of, for example, -60°C to -10°C, for example, -55°C to -15°C, for example, -50°C to -20°C, or, for example, -50°C to -30°C.

When the softener represented by Formula 1 satisfies the weight average molecular weight (Mw), polarity, density, boiling point (b.p.), and melting point (m.p.) within the above ranges, it may be more advantageous for achieving the effects desired in the present invention. In particular, flexibility can be significantly enhanced by further enhancing elongation at break, pinhole resistance, and forming depth.

Meanwhile, according to an embodiment of the present invention, the content of the softener represented by

Formula 1 contained in the biodegradable polyester resin may be important.

That is, the physical properties of the biodegradable polyester resin and a biodegradable polyester sheet, film, or molded article comprising the same may vary depending on the content of the softener represented by Formula 1 contained in the biodegradable polyester resin.

Specifically, the biodegradable polyester resin may comprise the softener represented by Formula 1 in an amount of 50 ppm to 800 ppm by weight.

More specifically, the biodegradable polyester resin may comprise the softener represented by Formula 1 in an amount of, for example, 50 ppm to 780 ppm, for example, 50 ppm to 750 ppm, for example, 50 ppm to 700 ppm, for example, 50 ppm to 650 ppm, for example, 70 ppm to 650 ppm, for example, 80 ppm to 650 ppm, for example, 100 ppm to 600 ppm, for example, 150 ppm to 600 ppm, for example, 200 ppm to 600 ppm, for example, 250 ppm to 600 ppm, or, for example, 300 ppm to 600 ppm, by weight.

If the content of the softener represented by Formula 1 contained in the biodegradable polyester resin is less than the above range, the plasticization efficiency desired in the present invention is low, whereby sufficient flexibility cannot be achieved. If it exceeds the above range, the softener volatilizes during the reaction and is discharged through the vacuum tube during the process, making it difficult to achieve flexibility relative to the amount added, and the viscosity becomes too low, making it difficult to form a bubble during blown processing, thereby deteriorating formability, processability, and productivity.

In particular, as the biodegradable polyester resin comprises the softener represented by Formula 1, the elongation at break, pinhole resistance, and forming depth can be adjusted without impairing the modulus, tensile strength, and thermal shrinkage rate, thereby providing high flexibility while maintaining an appropriate level of mechanical properties and thermal resistance, which can further enhance formability.

## Physical properties of the biodegradable polyester resin and a biodegradable polyester sheet and film prepared therefrom

When the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by Formula 1 in an amount of 50 ppm to 800 ppm according to an embodiment of the present invention, it has high flexibility while maintaining excellent strength and is capable of achieving excellent thermal resistance, formability, processability, and productivity at the same time.

In particular, as the type of the softener represented by Formula 1, its content, and the timing of adding the softener are controlled, it is possible to adjust the tensile strength, Young's modulus, $F_{100}$, elongation at break, forming depth, thermal shrinkage rate, number of pinholes, and melt index of the biodegradable polyester resin. Such composite properties as post-workability (PW), ductility rate, and thermal resistance ductility complexity (TRDC) obtained from these properties can also be achieved at an optimal level.

In the biodegradable polyester resin according to an embodiment of the present invention, the post-workability (PW) represented by the following Equation 1 is 10% or more:

[Equation 1]

$$\text{Post-workability (PW, \%)} = \frac{FD_{80}}{PR} \times 100\ (\%)$$

In Equation 1, $FD_{80}$ is the forming depth (cm), excluding the unit, measured by subjecting a biodegradable polyester film having a width of 5 cm, a length of 5 cm, and a thickness of 50 μm prepared from the biodegradable polyester resin to thermal pressing with a thermoforming press at 80°C for 30 seconds, and

PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

The post-workability (PW) represented by Equation 1 is expressed as the ratio of the forming depth ($FD_{80}$) to the number of pinholes (PR) of the biodegradable polyester film, which may be an indicator of the flexibility, formability, and processability of the biodegradable polyester film prepared from the biodegradable polyester resin.

The larger the ratio of the forming depth ($FD_{80}$) to the number of pinholes (PR) of the biodegradable polyester film, the more excellent the post-workability (PW).

That is, the larger the forming depth ($FD_{80}$) and the lower the number of pinholes, the higher the post-workability

(PW). In such a case, a biodegradable polyester sheet, film, or molded article prepared from the polyester resin has high flexibility and can enhance formability, processability, and productivity at the same time.

Thus, when the biodegradable polyester resin whose post-workability (PW) is adjusted to a certain range is used, it can be expanded to a variety of applications such as lap films, industrial stretch films, molding films, lamination of architectural interiors, and applications requiring three-dimensional molding such as 3D molding that requires high flexibility and excellent formability.

Specifically, the post-workability (PW) of the biodegradable polyester resin may be, for example, 20% or more, for example, 30% or more, for example, 40% or more, for example, 10% to 300%, for example, 20% to 300%, for example, 30% to 300%, for example, 35% to 300%, for example, 40% to 300%, for example, 40% to 250%, for example, 40% to 240%, for example, 40% to 200%, for example, 40% to 150%, or, for example, 40% to 100%.

When the post-workability (PW) of the biodegradable polyester resin satisfies the above range, the flexibility of a biodegradable polyester sheet, film, or molded article prepared from the polyester resin can be maximized, thereby further enhancing formability. If the post-workability (PW) of the biodegradable polyester resin is too low, the forming depth ($FD_{80}$) may decrease or the number of pinholes (PR) may increase, resulting in reduced flexibility, poor formability, or the appearance of the film or molded article may also be defective. In particular, the blow moldability in a blown film process using the biodegradable polyester resin may be deteriorated, for example, a bubble is not properly shaped, is stretched to one side to be oblique, or bursts. The biodegradable polyester resin, sheet, or film may be bonded to the surface of the mold of an injection molding machine during injection molding, making it difficult to be detached, or shape deformation such as heat shrinkage may take place.

Meanwhile, the forming depth ($FD_{80}$) in Equation 1 refers to the forming depth (cm) processed after thermal pressing with a thermoforming press. Its value may increase as the flexibility of a biodegradable polyester film prepared from the biodegradable polyester resin increases.

Specifically, Fig. 3a is a side view before the pressing of a thermoforming press used to measure the forming depth of a biodegradable polyester film according to an embodiment. Fig. 3b is a side view after the pressing of a thermoforming press used to measure the forming depth of a biodegradable polyester film according to an embodiment.

Referring to Figs. 3a and 3b, the thermoforming press (1) for measuring the forming depth ($FD_{80}$) of the polyester film comprises a lower plate (10) and an upper plate (20), wherein the lower plate (10) may comprise a variety of cavities (11 to 15) with varying depths ($D_{s1}$ to $D_{s5}$), and the upper plate (20) may comprise a variety of protrusions (21 to 25) with varying lengths ($D_{s1}$ to $D_{s5}$), corresponding to the cavities (11 to 15) of the lower plate (10).

Here, since the cavities (11 to 15) of the lower plate (10) have a mold and a heat source is equipped in the mold, the polyester film (50) may be molded in conformity to the mold when the polyester film (50) is placed between the lower plate (10) and the upper plate (20) and thermally pressed by the press.

$D_{s1}$ to $D_{s5}$ may be configured to sequentially vary, for example, 1 cm, 3 cm, 5 cm, 7 cm, and 10 cm.

$d_{sd}$ is the diameter (size) of the cavities of the lower plate (10), and $d_{su}$ is the diameter (size) of the protrusions of the upper plate (20). $d_{sd}$ and $d_{su}$ may differ from each other in light of the thickness of the polyester film.

For example, the diameter ($d_{su}$) of the protrusions of the upper plate (20) may be designed as a square with a length ($d_s$) on one side of about 10 mm and/or a circle with a diameter ($d_c$) of about 10 mm.

In addition, referring to Fig. 4, in light of the thickness of the polyester film (50), the cavities of the lower plate (10) may be designed such that its base is a square with a length ($d_s$) on one side of about 10.3 mm and/or a circle (round shape) with a diameter ($d_c$) of about 10.3 mm. In Fig. 4, $D_{s1}$ refers to the forming depth when the base of the cavity of the lower plate is a square, and $D_{c1}$ refers to the forming depth when the base of the cavity of the lower plate is a circle.

For example, since the upper plate (20) has a shape of 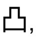, and the lower plate (10) has a shape of 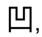, the polyester film (50) is placed between the lower plate (10) and the upper plate (20) and thermally pressed at a certain temperature, for example, about 80°C for about 30 seconds. Then, the forming depth ($FD_{80}$), which is the depth (cm) to which the polyester film (50) has been molded without tearing or breakage, may be measured. Here, the greater the forming depth ($FD_{80}$), the greater the flexibility of the polyester film.

According to an embodiment of the present invention, the forming depth ($FD_{80}$) may be, for example, 2 cm or more, for example, 2.1 cm or more, 3 cm or more, for example, 3.5 cm or more, for example, 4 cm or more, for example, 4.5 cm or more, or, for example, 5 cm or more, specifically, for example, 2 cm to 20 cm, for example, 2 cm to 10 cm, or, for example, 2 cm to 8 cm.

When the forming depth ($FD_{80}$) satisfies the above range, the flexibility of a biodegradable sheet, film, or molded article prepared from the biodegradable polyester resin can be enhanced, and it may be more advantageous for increasing the post-workability (PW) of the biodegradable polyester resin. As a result, processability, formability, and productivity can be enhanced at the same time.

The forming depth ($FD_{80}$) may be obtained by subjecting a film prepared from the biodegradable polyester resin to thermal pressing with a thermoforming press at 80°C for 30 seconds and measuring the depth thus processed.

In addition, the number of pinholes (PR) in Equation 1 refers to the number of pinholes measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, placing the film flatly on a blank paper, applying an oily ink on the film using a doctor blade, removing the film, and counting the number of ink dots appearing on the blank paper. Its value may decrease as the flexibility of a biodegradable polyester film prepared from the biodegradable polyester resin increases. According to an embodiment of the present invention, the number of pinholes (PR) may be, for example, 15 or fewer, for example, 14 or fewer, for example, 13 or fewer, for example, 12 or fewer, for example, 10 or fewer, for example, 9 or fewer, or, for example, 8 or fewer.

When the number of pinholes (PR) satisfies the above range, the flexibility of a biodegradable sheet, film, or molded article prepared from the biodegradable polyester resin can be enhanced, it may be more advantageous for adjusting the post-workability (PW) of the biodegradable polyester resin to the range described above, and processability, formability, and productivity can be enhanced at the same time.

Meanwhile, the biodegradable polyester resin according to an embodiment of the present invention may have a thermal resistance ductility complexity (TRDC) of 12 or more as represented by Equation 2:

[Equation 2]

$$\text{Thermal resistance ductility complexity (TRDC)} = \frac{PW + Eb}{S_{80}}$$

In Equation 2, PW is as described above,

Eb refers to the elongation at break (%), excluding the unit, measured by cutting a biodegradable polyester sheet prepared from the biodegradable polyester resin to prepare a specimen in accordance with ASTM D638 V-type and testing the specimen at a tensile speed of 100 mm/minute using a universal test machine (UTM), and

$S_{80}$ refers to the thermal shrinkage rate ($S_{80}$) represented by Equation 3,

[Equation 3]

$$\text{Thermal shrinkage rate } (S_{80}) = \frac{L_{25} - L_{80}}{L_{25}} \times 100\ (\%)$$

In Equation 3, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

The thermal resistance ductility complexity (TRDC) is a value obtained by dividing the sum of the post-workability (PW) of the biodegradable polyester resin and the elongation at break (Eb) of a biodegradable polyester sheet prepared from the biodegradable polyester resin by the thermal shrinkage rate ($S_{80}$) of a biodegradable polyester film prepared from the biodegradable polyester resin, which may refer to a composite performance of thermal resistance, flexibility, formability, and processability.

That is, the thermal resistance ductility complexity (TRDC) may be higher as the post-workability is higher, the elongation at break indicating flexibility is higher, and the thermal shrinkage rate represented by Equation 3 indicating thermal resistance is lower.

Specifically, the thermal resistance ductility complexity (TRDC) may be, for example, 13 or more, for example, 14 or more, for example, 14.5 or more, for example, 15 or more, for example, 16 or more, for example, 18 or more, or 19 or more, and, specifically, 12 to 25, 15 to 25, 16 to 24, 18 to 24, 19 to 24, or 20 to 24.

When the thermal resistance ductility complexity (TRDC) satisfies the above range, the thermal resistance, flexibility, formability, and processability of a biodegradable polyester sheet, film, and molded article prepared from the biodegradable polyester resin can be enhanced at the same time.

According to an embodiment of the present invention, the elongation at break (Eb) used in Equation 2 refers to the amount of elongation of a specimen right before its breakage measured by cutting a biodegradable polyester sheet prepared from the biodegradable polyester resin to prepare the specimen in accordance with ASTM D638 V-type and testing the specimen at a tensile speed of 100 mm/minute using a universal test machine (UTM). The increase in the value of elongation at break (Eb) may mean an increase in elongation capacity.

The elongation at break (Eb) may be, for example, 500% or more, for example, 520% or more, for example, 550% or more, for example, 580% or more, for example, 600% or more, for example, 650% or more, for example, 700%,

for example, 730% or more, for example, 750% or more, or, for example, 800% or more. As the elongation at break (Eb) increases, the elongation of the sheet may increase, and the formability may be further enhanced.

Meanwhile, the thermal shrinkage rate ($S_{80}$) represented by Equation 3 is a value obtained by converting the degree of heat shrinkage of a biodegradable polyester film specimen at a hot air temperature of 80°C into a percentage. It is a value calculated as a percentage of the change between the initial length of a biodegradable polyester film specimen and the length of the specimen after it has been left in a hot air oven relative to the initial length of the specimen.

The thermal shrinkage rate ($S_{80}$) may be calculated by cutting a biodegradable polyester film into 150 mm in length and 2 cm in width regardless of the direction to prepare a specimen and then measuring the initial length thereof at room temperature and the length of the biodegradable polyester film specimen after it has been left for 5 minutes in a hot air oven at 80°C.

The thermal shrinkage rate ($S_{80}$) may be 50% or less, 49% or less, 48% or less, 47% or less, 45% or less, 43% or less, or 42% or less.

If the thermal shrinkage rate ($S_{80}$) satisfies the above range or less, the degree of heat shrinkage is small at a hot air temperature of 80°C or higher, and the blow moldability or injection moldability can be further enhanced; at the same time, it is possible to improve the physical properties of a biodegradable polyester film or molded article. Thus, it can be more advantageous for various applications.

In addition, although a lower thermal shrinkage rate ($S_{80}$) is advantageous in terms of thermal resistance and formability, it may be important to simultaneously enhance flexibility in a range in which the thermal shrinkage rate ($S_{80}$) does not excessively increase.

Meanwhile, the Young's modulus ($YM_{100}$) measured using a biodegradable polyester sheet prepared from the biodegradable polyester resin may be, for example, less than 15 kgf/mm$^2$, for example, 14 kgf/mm$^2$ or less, for example, 12 kgf/mm$^2$ or less, for example, 10 kgf/mm$^2$ or less, for example, 9 kgf/mm$^2$ or less, for example, 8 kgf/mm$^2$ or less, for example, 6 kgf/mm$^2$ or less, for example, 5 kgf/mm$^2$ or less, or, for example, 4 kgf/mm$^2$ or less. Specifically, it may be, for example, 0.1 kgf/mm$^2$ to less than 15.0 kgf/mm$^2$, for example, 0.1 kgf/mm$^2$ to 14.0 kgf/mm$^2$, for example, 0.1 kgf/mm$^2$ to 12.0 kgf/mm$^2$, for example, 0.1 kgf/mm$^2$ to 10.0 kgf/mm$^2$, for example, 0.1 kgf/mm$^2$ to 9.0 kgf/mm$^2$, for example, 0.1 kgf/mm$^2$ to 8.0 kgf/mm$^2$, for example, 0.2 kgf/mm$^2$ to 8.0 kgf/mm$^2$, for example, 0.5 kgf/mm$^2$ to 7.5 kgf/mm$^2$, for example, 0.5 kgf/mm$^2$ to 7.0 kgf/mm$^2$, for example, 0.5 kgf/mm$^2$ to 6.0 kgf/mm$^2$, or, for example, 0.5 kgf/mm$^2$ to 4.0 kgf/mm$^2$.

When the Young's modulus ($YM_{100}$) satisfies the above range, flexibility can be enhanced, and formability, processability, and productivity can be enhanced at the same time. In addition, the lower the Young's modulus within the above range, the better the flexibility. However, it may also be important to control it to an appropriate range. If the Young's modulus ($YM_{100}$) falls outside the above range, stiffness increases, whereby it may be easily fractured or broken by an external impact.

The biodegradable polyester sheet is cut to prepare a specimen in accordance with ASTM D638 V-type. The specimen is then tested using INSTRON's universal testing machine (UTM, model name 4206-001) at a tensile speed of 100 mm/minute to calculate the Young's modulus ($YM_{100}$) as the slope of the straight line at an elongation at break of 100%. The Young's modulus is a mechanical property for measuring the flexibility of the biodegradable polyester sheet specimen. It may indicate elastic modulus defining the relationship between the stress (force per unit area) and the strain of a linear elastic material in a uniaxial deformation region, and it may be a measure of flexibility and formability according to an embodiment of the present invention.

Meanwhile, $F_{100}$ measured using a biodegradable polyester sheet prepared from the biodegradable polyester resin may be, for example, 0.01 kgf/mm$^2$ to less than 1.7 kgf/mm$^2$, for example, 0.01 kgf/mm$^2$ to 1.5 kgf/mm$^2$, for example, 0.01 kgf/mm$^2$ to 1.2 kgf/mm$^2$, for example, 0.02 kgf/mm$^2$ to 1.0 kgf/mm$^2$, for example, 0.03 kgf/mm$^2$ to 1.0 kgf/mm$^2$, for example, 0.1 kgf/mm$^2$ to 0.95 kgf/mm$^2$, for example, 0.1 kgf/mm$^2$ to 0.9 kgf/mm$^2$, for example, 0.1 kgf/mm$^2$ to 0.85 kgf/mm$^2$, or, for example, 0.4 kgf/mm$^2$ to 0.85 kgf/mm$^2$.

The biodegradable polyester sheet is cut to prepare a specimen in accordance with ASTM D638 V-type. The specimen is then tested using INSTRON's universal testing machine (UTM, model name 4206-001) at a tensile speed of 100 mm/minute to calculate $F_{100}$ as the load applied when elongated by 100%.

When the above range is satisfied, flexibility can be enhanced, and formability, processability, and productivity can be enhanced at the same time. In addition, the lower the $F_{100}$ within the above range, the better the flexibility. However, it may also be important to control it to an appropriate range for expansion to various applications. If $F_{100}$ falls outside the above range, stiffness increases, whereby it may be easily fractured or broken by an external impact.

Meanwhile, the biodegradable polyester resin can maintain an appropriate level of tensile strength while maintaining high flexibility. Specifically, a biodegradable polyester sheet prepared from the biodegradable polyester resin may have a tensile strength of 25 MPa or more.

A biodegradable polyester sheet prepared from the biodegradable polyester resin is cut to prepare a specimen in accordance with ASTM D638 V-type. The specimen is then tested using INSTRON's universal testing machine (UTM, model name 4206-001) at a tensile speed of 100 mm/minute to calculate the tensile strength by the program built in the

equipment.

The tensile strength may be, for example, 25 MPa to 50 MPa, for example, 28 MPa to 49 MPa, for example, 30 MPa to 45 MPa, or, for example, 34 MPa to 45 MPa. When the tensile strength satisfies the above range, an appropriate level of mechanical strength can be maintained, which is advantageous for enhancing the quality of a sheet, film, or molded article prepared from the biodegradable polyester resin, and productivity, processability, and formability can be enhanced at the same time.

Meanwhile, the biodegradable polyester resin may have a melt index (g/10 minutes) of, for example, 10 g/10 minutes or less, for example, 9 g/10 minutes or less, for example, 7 g/10 minutes or less, for example, 6 g/10 minutes or less, for example, 5.5 g/10 minutes or less, or 2 g/10 minutes to 10 g/10 minutes or 3 g/10 minutes to 6 g/10 minutes.

The melt index (g/10 minutes) refers to the melt flowability of a biodegradable polyester resin at a constant load and temperature. When the above range is satisfied, it may be advantageous in terms of formability, processability, and productivity.

Meanwhile, the biodegradable polyester resin according to an embodiment of the present invention has excellent blow moldability.

In general, in the preparation of a biodegradable polyester film, the blown film process is a very important production process. That is, in a blown film process, it is necessary that a bubble is formed well and that a final product is prepared without bonding between the film surfaces during winding. For this purpose, it is important to make the biodegradable polyester resin have an appropriate level of productivity, processability, and formability, as well as physical properties.

According to an embodiment of the present invention, as a softener represented by Formula 1 is used, it is possible to appropriately adjust the tensile strength, Young's modulus, $F_{100}$, forming depth, pinhole resistance, and elongation at break, thereby further enhancing the blow moldability.

The configuration and physical properties of the biodegradable polyester resin according to an embodiment of the present invention can be efficiently achieved by using the process for preparing a biodegradable polyester resin according to an embodiment of the present invention.

Hereinafter, the process for preparing a biodegradable polyester resin will be described in detail.

## Process for preparing a biodegradable polyester resin

In an embodiment according to the present invention, there is provided a process for preparing a biodegradable polyester resin, which comprises a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by the above Formula 1 in an amount of 50 ppm to 800 ppm.

According to an embodiment of the present invention, in the process for preparing a biodegradable polyester resin, a diol component and an aromatic dicarboxylic acid are mixed to obtain a slurry; the slurry is subjected to an esterification reaction to obtain a prepolymer; and the prepolymer is subjected to a polycondensation reaction. In particular, the softener represented by Formula 1 is added during the esterification reaction, during the polycondensation reaction, or both. As a result, the softener represented by Formula 1 participates in the reaction and copolymerizes with the polyester resin, whereby it is possible to further enhance the mechanical properties of the polyester resin, a biodegradable polyester sheet, film, or molded article prepared therefrom, as well as the flexibility thereof. In particular, as a specific amount of a softener composed of a specific component is employed such that the softener is contained in the polyester resin in an amount of 50 ppm to 800 ppm, it has excellent mechanical properties and thermal resistance, as well as high flexibility, and the softener that volatilizes during the reaction is minimized to provide an appropriate level of viscosity. As a result, a bubble is formed well in a blown process, whereby formability, processability, and productivity can be enhanced at the same time.

If the softener represented by Formula 1 is compounded with the biodegradable polyester resin, without adding it during the esterification reaction, during the polycondensation reaction, or both, strength decreases whereas flexibility may increase by virtue of plasticization. Thus, there may be difficulties in achieving the effects desired in the present invention.

However, according to an embodiment of the present invention, the softener represented by Formula 1 is added during the polymerization of a polyester resin, whereby the softener represented by Formula 1 is copolymerized with the polymer units and can be stably plasticized in the molecules. In the polyester resin, the softener can be inserted as side chains, both ends, or random branches of the copolymer to form a random copolymer, thereby maximizing the flexibility of the polyester resin and further enhancing the overall physical properties.

Referring to Fig. 2, the process for preparing a biodegradable polyester resin (S100) comprises a first step (S 110) of mixing a diol component and an aromatic dicarboxylic acid to obtain a slurry.

That is, the first step is a step of mixing a diol component and an aromatic dicarboxylic acid to form a slurry therefrom.

As a diol component and an aromatic dicarboxylic acid are mixed and formed into a slurry, the diol component and the aromatic dicarboxylic acid can be uniformly reacted, and it is effective for expediting the esterification reaction, whereby the reaction efficiency can be increased.

In particular, if an aromatic dicarboxylic acid such as terephthalic acid has complete crystallinity and is in a powder form, its solubility in the diol is very low, whereby it may be difficult to carry out a homogeneous reaction. Thus, the step of forming a slurry may play a very important role in providing a biodegradable polyester resin, sheet, and film having excellent physical properties according to an embodiment of the present invention and enhancing the reaction efficiency.

In addition, in the case where all of a diol component, an aromatic dicarboxylic acid, and an aliphatic dicarboxylic acid are mixed and subjected to an esterification reaction, without the step of first mixing the diol component and the aromatic dicarboxylic acid to form a slurry, the reaction of the diol component and the aliphatic dicarboxylic acid may be preferentially carried out. Thus, it may be difficult to control the number of the first repeat unit and the second repeat unit as desired in the present invention.

According to an embodiment of the present invention, in the case where the aromatic dicarboxylic acid is terephthalic acid, terephthalic acid is a white crystal that has perfect crystallinity and sublimes at around 300°C under normal pressure without a melting point, and it has very low solubility in the diol, making it difficult to carry out a homogeneous reaction. In the case where the step of forming a slurry is performed before the esterification reaction, a uniform reaction can be induced by increasing the surface area thereof for reacting with the diol component in the solid matrix of terephthalic acid.

In addition, according to an embodiment of the present invention, in the case where the aromatic dicarboxylic acid is dimethyl terephthalate, dimethyl terephthalate may be made into a molten state at about 142°C to 170°C by the step of forming a slurry to be reacted with the diol. Thus, it is possible to carry out the esterification reaction more quickly and efficiently.

Meanwhile, in the first step of forming a slurry, the configuration and physical properties of the biodegradable polyester resin may vary depending on the particle size, particle size distribution, slurry-forming conditions, and the like of the aromatic dicarboxylic acid.

For example, the aromatic dicarboxylic acid may comprise terephthalic acid, and the terephthalic acid may have an average particle diameter (D50) of 400 μm or less, for example, 10 μm to 400 μm, in a particle size distribution (PSD) measured by a particle size analyzer Microtrac S3500 and a standard deviation of the average particle diameter (D50) of 100 or less. The standard deviation refers to the square root of variance.

The average particle diameter (D50) of terephthalic acid may be, for example, 20 μm to 200 μm, for example, 30 μm to 180 μm, for example, 50 μm to 150 μm, or, for example, 50 μm to 100 μm. When the average particle diameter (D50) of terephthalic acid satisfies the above range, it may be more advantageous in terms of solubility enhancement in diols and reaction rate.

If the average particle diameter (D50) of terephthalic acid is less than the above range, the average particle diameter is too small, so that primary particles may be undesirably converted to aggregated secondary particles. If the average particle diameter (D50) of terephthalic acid exceeds the above range, the average particle diameter is too large, so that the solubility in diols is reduced, thereby lowering the reaction rate, and it may be difficult to achieve a homogenization reaction.

In addition, the standard deviation of the average particle diameter (D50) may be 100 or less, for example, 5 to 90, for example, 5 to 80, for example, 5 to 70, for example, 10 to 70, for example, 15 to 70, or, for example, 15 to 50. When the standard deviation of the average particle diameter (D50) satisfies the above range, it may be more advantageous in terms of solubility enhancement in diols and reaction rate.

Further, when the average particle diameter (D50) and the standard deviation thereof each satisfy the above ranges, the reaction time can be shortened by 1.5 times or more, so that it may be preferable in terms of reaction efficiency.

When the aromatic dicarboxylic acid is dimethyl terephthalate, it may be used in a molten state, or, when measured in a particle state, it may have an average particle diameter (D50) and a standard deviation thereof similar to those of terephthalic acid.

In the slurry-forming process of the first step, the diol component and the aromatic dicarboxylic acid may be mixed and fed to a slurry agitator (tank).

According to an embodiment of the present invention, in the slurry-forming process of the first step, the agitating force until the slurry is formed is very important; thus, the number and shape of agitating blades of the agitator and the conditions for forming the slurry are very important.

It may be more advantageous for producing an efficient agitating effect that the slurry agitator is, for example,

an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous to each other. In such a case, a slurry without precipitation can be obtained. If the shape of the agitator and the number of the rotor blades do not satisfy the above conditions, when the diol and the aromatic dicarboxylic acid are initially mixed, the aromatic dicarboxylic acid may settle to the bottom, thereby causing phase separation.

The slurry-forming process of the first step may comprise mixing the diol component and the aromatic dicarboxylic acid and agitating the mixture at 60°C to 100°C and 50 rpm to 200 rpm for 10 minutes or longer, for example, 10 minutes to 200 minutes. When the above temperature, speed, and agitation time are satisfied, a homogeneous slurry can be obtained without phase separation, which is advantageous in terms of reaction efficiency, and the physical properties of the biodegradable polyester resin desired in the present invention can be efficiently obtained.

The diol component may comprise 1,4-butanediol, 1,2-ethanediol, 1,3-propanediol, or a derivative thereof.

Specifically, the diol component may comprise 1,4-butanediol, 1,2-ethanediol, 1,3-propanediol, or a derivative thereof in an amount of 95% by mole or more, 98% by mole or more, 99% by mole or more, or 100% by mole, based on the total number of moles of the diol components. As the diol component comprises 1,4-butanediol, 1,2-ethanediol, 1,3-propanediol, or a derivative thereof in the above amount, it is possible to enhance the biodegradability, water degradability, and physical properties of a biodegradable polyester resin or a biodegradable polyester sheet, film, or molded article prepared from the same.

The diol component may be added all at once or dividedly. For example, the diol component may be added dividedly at the time of mixing with an aromatic dicarboxylic acid and mixing with an aliphatic dicarboxylic acid.

The aromatic dicarboxylic acid may comprise one or more selected from the group consisting of terephthalic acid, dimethyl terephthalate, and a derivative thereof. Specifically, the aromatic dicarboxylic acid may be terephthalic acid or dimethyl terephthalate.

In addition, the aromatic dicarboxylic acid may be employed in an amount of 40% by mole to 60% by mole, 42% by mole to 58% by mole, 44% by mole to 58% by mole, 44% by mole to 57% by mole, 44% by mole to 55% by mole, 44% by mole to 53% by mole, 46% by mole to 52% by mole, 48% by mole to 52% by mole, or 50% by mole to 52% by mole, based on the total number of moles of the dicarboxylic acids.

When the molar ratio of the aromatic dicarboxylic acid is controlled to the above range, it is more advantageous for producing the effects of the present invention and to enhance the physical properties, biodegradability, and water degradation reduction rate of a biodegradable polyester sheet, film, or molded article prepared from the same.

Referring back to Fig. 2, the process for preparing a biodegradable polyester resin comprises a second step (S120) of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer.

In the esterification reaction of the second step, the reaction time may be shortened by using the slurry obtained in the first step. For example, the reaction time may be shortened by 1.5 times or more by using the slurry obtained in the first step.

The esterification reaction of the second step may be carried out at least once.

According to an embodiment of the present invention, in the esterification reaction, an aliphatic dicarboxylic acid, or a diol and an aliphatic dicarboxylic acid, may be added to the slurry to carry out the esterification reaction once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until water as a by-product theoretically reaches 95%. For example, the esterification reaction may be carried out for 0.5 hour to 4.5 hours, 0.5 hour to 3.5 hours, or 1 hour to 3 hours, but it is not limited thereto.

In the case where the esterification reaction is carried out once according to an embodiment of the present invention, the softener represented by Formula 1 may be added during the esterification reaction. For example, in the esterification reaction, when 95% of water as a by-product is discharged, the softener represented by Formula 1 may be added.

In the case where the esterification reaction is carried out twice according to another embodiment of the present invention, the softener represented by Formula 1 may be added during the first esterification reaction (ES step 1), and/or during the second esterification reaction (ES step 2). For example, in the first esterification reaction (ES step 1), when 95% of water as a by-product is discharged, the softener represented by Formula 1 may be added. Alternatively, in the second esterification reaction (ES step 2), when 95% of water as a by-product is discharged, the softener represented by Formula 1 may be added.

The amount of the softener represented by Formula 1 employed may be, for example, 50 ppm to 1,200 ppm, for example, 50 ppm to 1,000 ppm, for example, 50 ppm to 900 ppm, for example, 50 ppm to 850 ppm, for example, 70 ppm to 800 ppm, for example, 80 ppm to 800 ppm, for example, 100 ppm to 800 ppm, for example, 150 ppm to 800 ppm, for example, 200 ppm to 800 ppm, for example, 250 ppm to 800 ppm, or, for example, 300 ppm to 800 ppm, based

on the total weight of the diol, aromatic dicarboxylic acid, and aliphatic dicarboxylic acid.

When the softener represented by Formula 1 is used in the above range, the softener represented by Formula 1 can be contained in the polyester resin in an amount of 50 ppm to 800 ppm, whereby the physical properties desired in the present invention can be achieved.

The types and properties of the softener represented by Formula 1 are as described above.

The prepolymer may have a number average molecular weight of 500 to 10,000 g/mole. For example, the number average molecular weight of the prepolymer may be 500 to 8,500 g/mole, 500 to 8,000 g/mole, 500 to 7,000 g/mole, 500 to 5,000 g/mole, or 500 to 2,000 g/mole. The number average molecular weight of the prepolymer may be increased due to the branching effect of the softener represented by Formula 1. In addition, as the number average molecular weight of the prepolymer satisfies the above range, it is possible to efficiently increase the molecular weight of the polymer in the polycondensation reaction. The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

According to another embodiment of the present invention, the esterification reaction may be carried out two or more times as a step of subjecting the slurry to a first esterification reaction; and a step of adding an aliphatic dicarboxylic acid, or a diol and an aliphatic dicarboxylic acid, to the product of the first esterification reaction and carrying out a second esterification reaction.

In the case where the esterification reaction is carried out two or more times, it is possible to enhance the reaction stability and reaction uniformity as compared with the case where the esterification reaction is carried out once, and the desired ratio of the number of the first repeat unit to the number of the second repeat unit can be adjusted, leading to an advantage in that the effect according to an embodiment of the present invention can be efficiently produced.

The first esterification reaction and the second esterification reaction may each be carried out at 250°C or lower for 0.5 hour to 5 hours. Specifically, the first esterification reaction and the second esterification reaction may each be carried out at atmospheric pressure and 180°C to 250°C, 185°C to 240°C, or 200°C to 240°C, until water as a by-product theoretically reaches 95%. For example, the first esterification reaction and the second esterification reaction may each be carried out for 0.5 hour to 4.5 hours, 0.5 hour to 3.5 hours, or 1 hour to 3 hours, but it is not limited thereto.

Meanwhile, in the second step, the softener represented by Formula 1 may be added at the time of the esterification reaction, for example, if the first and second esterification reactions are carried out, at the time of the first esterification reaction, at the time of the second esterification reaction, or both. The amount and types of the softener represented by Formula 1 are as described above.

According to an embodiment of the present invention, the addition of the softener represented by Formula 1 during the esterification reaction can induce stable plasticization, whereby it is possible to further enhance the elongation at break, pinhole resistance, and forming depth of a biodegradable polyester sheet, film, or molded article prepared from the biodegradable polyester resin, thereby achieving high flexibility. In addition, the stable plasticization makes it possible to readily achieve a polyester resin with a high viscosity molecular weight, and the viscosity is adequate and the blow moldability is enhanced, whereby the excellent physical properties desired in the present invention can be achieved without defects.

According to an embodiment of the present invention, when the softener represented by Formula 1 is added at the time of the first esterification reaction (at the time of ES step 1), a catalyst may be optionally added prior to the esterification reaction, and the first esterification reaction is carried out in which the softener represented by Formula 1 may be added when 95% or more of the by-product is discharged and the first esterification reaction is almost completed so that an oligomer (reaction product) is produced. In such an event, a slight bonding force is generated between the oligomer and the softener represented by Formula 1 by the polar segment of the softener represented by Formula 1, and the non-polar segment of the softener broadens the spacing of the oligomer chains to impart flexibility, thereby obtaining a plasticized oligomer. A diol and an aliphatic dicarboxylic acid may be added to the plasticized oligomer to carry out a second esterification reaction.

According to another embodiment of the present invention, when the softener represented by Formula 1 is added at the time of the second esterification reaction (at the time of ES step 2), a diol and a dicarboxylic acid, and optionally a catalyst, may be added to the reaction product obtained by the first esterification reaction, and the second esterification reaction is carried out in which the softener represented by Formula 1 may be added when 95% or more of the by-product is discharged and the second esterification reaction is almost completed so that a prepolymer is produced. In such an event, in the second esterification reaction, a slight bonding force is generated between the prepolymer and the softener represented by Formula 1 by the polar segment of the softener represented by Formula 1, and the non-polar segment of the softener broadens the spacing of the prepolymer chains to impart flexibility, thereby obtaining a plasticized prepolymer.

According to an embodiment of the present invention, when the softener represented by Formula 1 has a linear structure, it may be more advantageous from the viewpoint of the reaction characteristics of the linear structure to be added at the time of the second esterification reaction in which an aliphatic dicarboxylic acid is added.

The prepolymer may have a number average molecular weight of 500 to 10,000 g/mole. For example, the number average molecular weight of the prepolymer may be 500 to 8,500 g/mole, 500 to 8,000 g/mole, 500 to 7,000 g/mole, 500 to 5,000 g/mole, or 500 to 2,000 g/mole. As the number average molecular weight of the prepolymer satisfies the above range, it is possible to efficiently increase the molecular weight of the polymer in the polycondensation reaction, thereby further enhancing the strength characteristics.

The aliphatic dicarboxylic acid may comprise adipic acid, succinic acid, sebacic acid, or a derivative thereof. Specifically, the aliphatic dicarboxylic acid may comprise adipic acid or succinic acid.

In addition, the aliphatic dicarboxylic acid may be employed in an amount of 20% by mole to 60% by mole, 30% by mole to 60% by mole, 40% by mole to 60% by mole, 42% by mole to 56% by mole, 43% by mole to 56% by mole, 45% by mole to 56% by mole, 47% by mole to 56% by mole, 48% by mole to 54% by mole, 48% by mole to 52% by mole, or 50% by mole to 52% by mole, based on the total number of moles of the dicarboxylic acid components.

When the content of the aliphatic dicarboxylic acid is controlled to the above range, it is possible to enhance the productivity, processability, and formability of the biodegradable polyester resin at the same time and to enhance the physical properties, biodegradability, and water degradability of a biodegradable polyester sheet, film, or molded article prepared from the same.

In particular, since the aliphatic dicarboxylic acid is composed of a linear chain, it may have an impact on the stickiness characteristics of the biodegradable polyester resin.

Specifically, if the content of the aliphatic dicarboxylic acid is excessive, the stickiness characteristics of the biodegradable polyester resin may be increased, thereby deteriorating processability.

In the second step, nanocellulose may be further added at the time of the esterification reaction, for example, if the first and second esterification reactions are carried out, at the time of the first esterification reaction, at the time of the second esterification reaction, or both.

Specifically, in the case where the esterification reaction is carried out once, nanocellulose may be further added at the time of the esterification reaction, for example, at the time when an aliphatic dicarboxylic acid is, or a diol and an aliphatic dicarboxylic acid are, added.

In addition, in the case where the esterification reaction is carried out two or more times, nanocellulose may be added at the time of the first esterification reaction, at the time of the second esterification reaction, or both. For example, nanocellulose may be added at the time of the second esterification reaction, that is, at the time when an aliphatic dicarboxylic acid is, or a diol and an aliphatic dicarboxylic acid are, added, or at the initial stage of the esterification reaction. In such a case, the nanocellulose may be efficiently dispersed. In particular, it is preferable in terms of physical properties such as strength and thermal properties of the biodegradable polyester resin to add nanocellulose, and it is possible to enhance the physical properties such as strength and biodegradability of a biodegradable polyester sheet, film, or molded article as well.

The nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose may have a diameter of 1 nm to 200 nm. For example, the diameter of the nanocellulose may be 1 nm to 150 nm, 1 nm to 120 nm, 1 nm to 100 nm, 1 nm to 95 nm, 5 nm to 90 nm, 10 nm to 80 nm, 1 nm to 50 nm, 5 nm to 45 nm, 10 nm to 60 nm, 1 nm to 10 nm, 10 nm to 30 nm, or 15 nm to 50 nm.

In addition, the nanocellulose may have a length of 5 nm to 10 μm. For example, the length of the nanocellulose may be 5 nm to 1 μm, 10 nm to 150 nm, 20 nm to 300 nm, 200 nm to 500 nm, 100 nm to 10 μm, 500 nm to 5 μm, 300 nm to 1 μm, or 1 μm to 10 μm. As the diameter and length of the nanocellulose satisfy the above ranges, it is possible to further enhance the biodegradability and physical properties of the biodegradable polyester resin or a biodegradable polyester sheet, film, or molded article prepared from the same.

In addition, the nanocellulose may be pretreated with a bead mill or pretreated with ultrasound. Specifically, the nanocellulose may be obtained by pretreating nanocellulose dispersed in water with a bead mill or ultrasound.

First, the bead mill pretreatment may be carried out by a vertical mill or a horizontal mill as a wet milling apparatus. A horizontal mill is preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm. For example, the diameter of beads may be 0.3 mm to 0.9 mm, 0.4 mm to 0.8 mm, 0.45 mm to 0.7 mm, or 0.45 mm to 0.6 mm. As the diameter of beads satisfies the above range, it is possible to further enhance the dispersibility of the nanocellulose. If the diameter of beads exceeds the above range, the average particle size and particle size deviation of the nanocellulose may increase, which may lower the dispersibility.

In addition, it is preferable from the viewpoint of transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more are preferred, but they are not limited thereto.

In addition, the ultrasonic pretreatment is a method of physically crushing or pulverizing nanoparticles with waves generated by emitting ultrasound of 20 kHz into a solution.

The ultrasonic pretreatment may be carried out for less than 30 minutes with an energy dose of 30,000 J or less. For example, the ultrasonic pretreatment may be carried out for 25 minutes or less, 20 minutes or less, or 18 minutes or less with an energy dose of 25,000 J or less or 22,000 J or less. As the energy dose and the operation time satisfy the above ranges, the effect of the pretreatment with ultrasound, that is, the enhancement in dispersibility can be maximized. If the energy dose exceeds the above range, the nanoparticles may be re-agglomerated, thereby deteriorating the dispersibility.

The nanocellulose according to an embodiment may be pretreated with a bead mill or pretreated with ultrasound. Alternatively, the nanocellulose according to an embodiment may be pretreated with both a bead mill and ultrasound. In such an event, it is preferable that ultrasonic pretreatment is carried out after the bead mill pretreatment to prevent re-agglomeration, thereby enhancing the dispersibility.

The biodegradable polyester resin according to an embodiment has a polydispersity index (PDI) of less than 2.0. For example, the polydispersity index of the biodegradable polyester resin may be less than 2.0, 1.95 or less, or 1.9 or less.

As the polydispersity index is adjusted to the above range, the thermal resistance can be further enhanced. Specifically, if the polydispersity index exceeds the above range, the thermal resistance of the biodegradable polyester resin may be deteriorated. Thus, in the process of preparing a molded article such as a film using the biodegradable polyester resin, the rate of degradation of the polymer may be increased, thereby reducing the processability and productivity.

The polydispersity index may be calculated according to the following Equation A.

[Equation A]

$$\text{Polydispersity (PDI)} = \frac{Mw}{Mn}$$

In Equation A, Mw is the weight average molecular weight (g/mole) of a resin, and Mn is the number average molecular weight (g/mole) of the resin.

In addition, the content of the nanocellulose may be, for example, 3,000 ppm or less, for example, 2,500 ppm or less, for example, 2,000 ppm or less, 1,800 ppm or less, 1,500 ppm or less, 1,000 ppm or less, 900 ppm or less, 800 ppm or less, 700 ppm or less, 600 ppm or less, 500 ppm or less, or 400 ppm or less, and may be, for example, 100 ppm or more, 150 ppm or more, 200 ppm or more, 250 ppm or more, 300 ppm or more, 400 ppm or more, 500 ppm or more, 600 ppm or more, 800 ppm or more, or 1,000ppm or more, based on total weight of the diol, aromatic dicarboxylic acid, and aliphatic dicarboxylic acid. As the content of the nanocellulose satisfies the above range, the biodegradability and physical properties such as strength can be further enhanced.

A titanium-based catalyst or a germanium-based catalyst may be further added to the slurry before the esterification reaction in the second step.

Specifically, in the case where the esterification reaction is carried out once, a titanium-based catalyst or a germanium-based catalyst may be further added to the slurry.

In addition, in the case where the esterification reaction is carried out two or more times, a titanium-based catalyst or a germanium-based catalyst may be further added to the slurry, the reaction product obtained by the first esterification of the slurry, or both.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diol, aromatic dicarboxylic acid, and aliphatic dicarboxylic acid. For example, the titanium-based catalyst or germanium-based catalyst may be employed in an amount of 100 ppm to 800 ppm, 150 ppm to 700 ppm, 200 ppm to 600 ppm, or 250 ppm to 550 ppm. As the content of the catalyst satisfies the above range, the processability can be further enhanced.

A phosphorus-based stabilizer may be further added during the esterification reaction in the second step, at

the end of the esterification reaction, or both.

Specifically, in the case where the esterification reaction is carried out once, a phosphorus-based stabilizer may be further added during the esterification reaction, at the end of the esterification reaction, or both.

In addition, in the case where the esterification reaction is carried out two or more times, a phosphorus-based stabilizer may be further added during the first esterification reaction, during the second esterification reaction, or both, or at the end of the first esterification reaction and at the end of the second esterification reaction.

Specifically, the biodegradable polyester resin may further comprise at least one phosphorus-based stabilizer selected from the group consisting of amine-based high-temperature thermal stabilizers such as tetraethylenepentaamine, phosphoric acid, phosphorous acid, polyphosphoric acid, trimethylphosphate, triethylphosphate, triethylphosphonoacetate, trimethylphosphine, and triphenylphosphine.

The content of the phosphorus-based stabilizer may be 3,000 ppm or less based on the total weight of the diol, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diol, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

At least one selected from the group consisting of an additive such as silica, potassium, titanium dioxide, and magnesium and a color-correcting agent such as cobalt acetate may be further added at the end of the esterification reaction of the second step. That is, the additive and/or color-correcting agent may be added after the completion of the esterification reaction and then stabilized, and the polycondensation reaction may then be carried out.

Referring back to Fig. 2, the process for preparing a biodegradable polyester resin (S100) comprises a third step (S130) of subjecting the prepolymer to a polycondensation reaction.

The polycondensation reaction may be carried out at 180°C to 280°C and 1.0 Torr or less for 1 hour to 5 hours. For example, the polycondensation reaction may be carried out at 190°C to 270°C, 210°C to 260°C, or 230°C to 255°C, at 0.9 Torr or less, 0.7 Torr or less, 0.2 Torr to 1.0 Torr, 0.3 Torr to 0.9 Torr, or 0.4 Torr to 0.6 Torr, for 1.5 hours to 5 hours, 2 hours to 5 hours, or 2.5 hours to 4.5 hours.

In addition, a titanium-based catalyst or a germanium-based catalyst may be further added to the prepolymer before the polycondensation reaction. In addition, one or more selected from the group consisting of an additive such as silica, potassium, titanium dioxide, and magnesium; a stabilizer such as trimethyl phosphate, triphenyl phosphate, trimethyl phosphine, phosphoric acid, phosphorous acid, and an amine-based stabilizer such as tetraethylenepentaamine; and a polymerization catalyst such as antimony trioxide, antimony trioxide, and tetrabutyl titanate may be further added to the prepolymer before the polycondensation reaction.

Meanwhile, the softener represented by Formula 1 may be added during the polycondensation reaction.

According to an embodiment of the present invention, the softener represented by Formula 1 may be added during the esterification reaction, rather than during the polycondensation reaction, to induce stable plasticization. For example, if the softener represented by Formula 1 is added during the polycondensation reaction, since the polycondensation reaction is carried out under a high vacuum, the softener represented by Formula 1 is easily sucked into the pipe on the vacuum side, so that a stable plasticization effect cannot be achieved, and flexibility cannot be achieved relative to the amount added. In addition, it may rather delay the reaction, making it difficult to obtain a high viscosity molecular weight. If the softener represented by Formula 1 is excessively added to solve this, the viscosity may be lowered. In such a case, it may be difficult to form a bubble during blow molding.

The polymer may have a number average molecular weight of greater than 30,000 g/mole. For example, the number average molecular weight of the polymer may be 40,000 g/mole or more, 41,000 g/mole or more, 42,000 g/mole or more, or 43,000 g/mole or more. As the number average molecular weight of the polymer satisfies the above range, the physical properties and processability can be further enhanced.

Thereafter, pellets may be prepared from the polymer.

Specifically, the polymer may be cooled to 15°C or lower, 10°C or lower, or 6°C or lower, and the cooled polymer may then be cut to prepare pellets.

The cutting step may be carried out using a pellet cutter without limitations as long as it is commonly used in the art, and the pellets may have various shapes. Examples of the pellet cutting method may include an underwater cutting method or a strand cutting method.

## Biodegradable polyester sheet

Meanwhile, in an embodiment of the present invention, a biodegradable polyester sheet may be prepared using the biodegradable polyester resin.

For example, the biodegradable polyester sheet may be prepared using the biodegradable polyester resin or polyester resin pellets.

Specifically, the polyester resin prepared above is put in, for example, a stainless steel (SUS) mold and maintained at about 150 to 300°C under a pressure of 5 to 20 MPa for 1 minute to 30 minutes using a hot press. It is then taken out and immediately cooled at 18°C to 25°C in water for about 10 seconds to 5 minutes to obtain a biodegradable polyester sheet.

The physical properties such as tensile strength, Young's modulus, and elongation at break of the biodegradable polyester sheet may satisfy the ranges described above concerning the biodegradable polyester resin.

## Biodegradable polyester film

In an embodiment of the present invention, there is provided a biodegradable polyester film, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by the above Formula 1 in an amount of 50 ppm to 800 ppm.

The biodegradable polyester film may have a thickness of 5 μm to 200 μm. For example, the thickness of the biodegradable polyester film may be 5 μm to 180 μm, 5 μm to 160 μm, 10 μm to 150 μm, 15 μm to 130 μm, 20 μm to 100 μm, 25 μm to 80 μm, or 25 μm to 60 μm.

The physical properties such as forming depth, pinhole resistance, and thermal shrinkage rate of the biodegradable polyester film may satisfy the ranges described above concerning the biodegradable polyester resin.

The biodegradable polyester film may be prepared using the biodegradable polyester resin or polyester resin pellets.

Specifically, the process for preparing a biodegradable polyester film may comprise a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; a third step of subjecting the prepolymer to a polycondensation reaction to obtain a polymer; a fourth step of preparing pellets from the polymer; and a fifth step of drying and melt-extruding the pellets, wherein a softener represented by Formula 1 may be added during the esterification reaction, during the polycondensation reaction, or both.

Details on the first step to the fourth step are as described above.

In the fifth step, the drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of the pellets satisfy the above ranges, it is possible to further enhance the quality of the biodegradable polyester film or molded article thus produced.

Upon completion of the drying, the moisture content may be 500 ppm or less, 400 ppm or less, 350 ppm or less, or 300 ppm or less.

In the fifth step, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, or 150°C to 240°C. The melt-extrusion may be carried out by a blown film process.

According to an embodiment of the present invention, as the biodegradable polyester film satisfies the specific configuration and the specific ranges of physical properties of the biodegradable polyester resin, it is possible to achieve excellent physical properties and biodegradability even if inorganic substances and other additives are added in an amount less than that commonly used in the production of the biodegradable polyester film.

For example, when the biodegradable polyester film is prepared, the inorganic substances may be added in a less amount than that commonly used, for example, about 20% by weight, to achieve equivalent or better physical properties.

## Biodegradable polyester molded article

In an embodiment of the present invention, a biodegradable polyester molded article may be prepared from the biodegradable polyester resin.

Specifically, the molded article may be prepared by molding the biodegradable polyester resin by a method known in the art such as extrusion or injection, and the molded article may be an injection molded article, an extrusion molded article, a thin film molded article, or a blow molded article, but it is not limited thereto.

For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes, or in the form of a container that can be used as a container for food packaging such as lunch boxes. In addition, the molded article may be a molded article of various types such as disposable straws, spoons, food plates, and forks.

In particular, the molded article may be formed from the biodegradable polyester resin in which the tensile strength, Young's modulus, $F_{100}$, forming depth, pinhole resistance, and elongation at break are adjusted, wherein it is possible to maximize flexibility while maintaining an appropriate level of tensile strength. It can be expanded to a variety of applications such as packaging materials, garbage bags, mulching films, and disposable products that require excellent durability and elongation at break, as well as lap films, industrial stretch films, molding films, lamination of architectural interiors, and applications requiring three-dimensional molding such as 3D molding that requires high flexibility. When it is applied to these applications, excellent properties can be exerted.

## Embodiments for Carrying Out the Invention

Hereinafter, the present invention will be described in detail with reference to examples. The following examples are only illustrative of the present invention, and the scope of the present invention is not limited thereto.

## <Example>

### Example 1

**Preparation of a biodegradable polyester resin**

#### Step 1: Obtaining a slurry

1,4-Butanediol (1,4-BDO) and terephthalic acid (TPA) were mixed at a molar ratio (1,4-BDO 48% by mole:TPA 48% by mole) of 1:1, which was then charged to a slurry tank (provided with an anchor type at the bottom, a height to the agitator of 30 mm, and three rotor blades) in a state without a catalyst. Here, terephthalic acid (TPA) had a D50 of 200 μm and a standard deviation (SD) of the D50 of 20.

Then, the mixture was agitated at about 70°C and 150 rpm for 30 minutes, thereby obtaining a slurry without phase separation.

#### Step 2: Preparation of a prepolymer

The slurry obtained in step 1 was fed to a reactor through a supply line, and 300 ppm of tetrabutyl titanate (Tyzor TnBT, Dupont) as a titanium-based catalyst was added thereto. A first esterification reaction was then carried out at 210°C and atmospheric pressure for about 1.5 hours. When 95% of water as a by-product was discharged, bis(2-ethylhexyl) phthalate (DEHP) (Sigma-Aldrich) was added to the reaction product (at the time of ES step 1), such that the composition in the resin was as shown in Table 1, to obtain a plasticized oligomer. Here, DEPH had a weight average molecular weight (Mw) of 390.6 g/mole and a polarity of 18.7.

Added to the plasticized oligomer were 52% by mole of 1,4-butanediol (1,4-BDO) based on the total number of moles of the diol components, 52% by mole of adipic acid (AA) based on the total number of moles of the dicarboxylic acids, 200 ppm of tetrabutyl titanate (Tyzor TnBT, Dupont) as a titanium-based catalyst and 100 ppm of triethyl phosphate as a stabilizer, based on the total weight of the diol, aromatic dicarboxylic acid, and aliphatic dicarboxylic acid. A second esterification reaction (ES step 2) was then carried out at 210°C and atmospheric pressure for about 1.5 hours until 95% of water as a by-product was discharged, thereby obtaining a prepolymer having a number average molecular weight of 1,500 g/mole.

#### Step 3: Polycondensation reaction

100 ppm of triethyl phosphate as a stabilizer based on the total weight of the diol, aromatic dicarboxylic acid, and aliphatic dicarboxylic acid was further added to the prepolymer obtained in step 2, which was continuously transferred to a pre-polycondensation step and subjected to a reaction while heated to 240°C and a low vacuum of atmospheric pressure to 100 Torr for 1 hour (PC pre-polycondensation step). Thereafter, it was transferred to a final polycondensation step and subjected to a polycondensation reaction for about 4 hours under 0.5 Torr in a disc ring type reactor (PC polycondensation step). Thereafter, a polymer having a number average molecular weight of about 45,000 g/mole was prepared by increasing the molecular weight to a high viscosity for about 3 hours while removing the residual 1,4-butanediol and by-products. It was cooled to 5°C and cut with a pellet cutter to obtain biodegradable polyester resin pellets.

**Preparation of a biodegradable polyester sheet**

Two Teflon sheets were prepared. A stainless steel (SUS) frame (with an area of 12 cm × 12 cm) was placed

on one Teflon sheet, and about 7 g of the polyester resin pellets prepared above was put in the stainless steel (SUS) frame (with an area of 12 cm × 12 cm), which was covered with another Teflon sheet. It was placed in the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

**Preparation of a biodegradable polyester film**

The biodegradable polyester resin pellets were dried at 80°C for 5 hours and then melt-extruded at 160°C using a blown film extruder (Blown Film Extrusion Line, manufacturer: Eugene Engineering) to prepare a biodegradable polyester film having a thickness of 50 μm.

**Example 2**

A biodegradable polyester resin, a biodegradable polyester sheet, and a biodegradable polyester film were prepared in the same manner as in Example 1, except that the content of the softener contained in the biodegradable polyester resin was changed, as shown in Table 1 below.

**Example 3**

A biodegradable polyester resin, a biodegradable polyester sheet, and a biodegradable polyester film were prepared in the same manner as in Example 1, except that the type of softener was changed to dibutyl phthalate (DBP), and the content thereof contained in the biodegradable polyester resin was changed, as shown in Table 1 below.

**Example 4**

A biodegradable polyester resin, a biodegradable polyester sheet, and a biodegradable polyester film were prepared in the same manner as in Example 1, except that step 1 was not carried out, 100% by mole of 1,4-butanediol (1,4-BDO), 48% by mole of terephthalic acid (TPA), and 52% by mole of adipic acid (AA) were added all at once in step 2, and 300 ppm of tetrabutyl titanate (Tyzor TnBT, Dupont) as a titanium-based catalyst was added based on the total weight of the diol, aromatic dicarboxylic acid, and aliphatic dicarboxylic acid; and the esterification reaction was carried out at 230°C and atmospheric pressure for about 3 hours until 95% of water as a by-product was discharged and the esterification reaction was almost completed at which time DEHP was added (while the content of DEHP contained in the biodegradable polyester resin was changed) to obtain a prepolymer.

**Example 5**

A biodegradable polyester resin, a biodegradable polyester sheet, and a biodegradable polyester film were prepared in the same manner as in Example 1, except that the type of softener was change to dibutyl phthalate (DBP), and the content of DBP contained in the biodegradable polyester resin was changed, and about 800 ppm, based on the total weight of the diol, aromatic dicarboxylic acid, and aliphatic dicarboxylic acid, of cellulose nanocrystal (CNC) (particle diameter of 190 nm) treated with ultrasound for 1 minute was further added when 1,4-butanediol (1,4-BDO) and adipic acid (AA) were added, as shown in Table 1 below.

**Example 6**

A biodegradable polyester resin, a biodegradable polyester sheet, and a biodegradable polyester film were prepared in the same manner as in Example 4, except that DBP was employed as a softener and added during the PC pre-polycondensation step in step 3, and its amount added was changed, as shown in Table 1 below.

**Example 7**

A biodegradable polyester resin, a biodegradable polyester sheet, and a biodegradable polyester film were prepared in the same manner as in Example 1, except that the content of the softener contained in the biodegradable polyester resin was changed, as shown in Table 1 below.

**Example 8**

A biodegradable polyester resin, a biodegradable polyester sheet, and a biodegradable polyester film were prepared in the same manner as in Example 4, except that the amounts of terephthalic acid (TPA) and adipic acid (AA) were changed to change the ratio (X/Y) of the number of the first repeat unit (X) and the number of the second repeat unit (Y), as shown in Table 1 below.

**Comparative Example 1**

A biodegradable polyester resin, a biodegradable polyester sheet, and a biodegradable polyester film were prepared in the same manner as in Example 1, except that the amounts of terephthalic acid (TPA) and adipic acid (AA) were changed to change the ratio (X/Y) of the number of the first repeat unit (X) and the number of the second repeat unit (Y), polytetramethylene ether glycol (PTMEG) with a weight average molecular weight (Mw) of about 800 g/mole was used as a softener instead of DEHP, and the content of PTMEG contained in the biodegradable polyester resin was changed, as shown in Table 1 below.

**Comparative Example 2**

A biodegradable polyester resin, a biodegradable polyester sheet, and a biodegradable polyester film were prepared in the same manner as in Example 1, except that the content of the softener contained in the biodegradable polyester resin was changed, as shown in Table 1 below.

**Comparative Example 3**

A biodegradable polyester resin, a biodegradable polyester sheet, and a biodegradable polyester film were prepared in the same manner as in Example 6, except that the type and content of the softener contained in the biodegradable polyester resin were changed, as shown in Table 1 below.

**Comparative Example 4**

A biodegradable polyester resin, a biodegradable polyester sheet, and a biodegradable polyester film were prepared in the same manner as in Example 4, except that the type and content of the softener contained in the biodegradable polyester resin were changed, as shown in Table 1 below.

**Evaluation Example**

**Evaluation Example 1: Analysis of the content of a softener**

1.0 g of each biodegradable polyester resin obtained in the Examples and Comparative Examples was weighed and dissolved in chloroform, which was measured using TD (thermal desorption) GC/MS for a peak area of the softener compound. The residual amount (content) of the softener in the biodegradable polyester resin was then calculated from the standard graph of the softener.

1. TD: JAI 505 III

- Thermal desorption temperature: 120°C
- Thermal desorption time: 30 minutes
- Cold trap temperature: -40°C
- SAT desorption temperature: 280°C
- SAT desorption time: 3 minutes
- Desorption flow: 50 ml/minute
- Needle temperature: 280°C
- Transfer line temperature: 280°C
- Split ratio: 50:1

2. GC: Agilent 7890B

- Column: HP 5, 350°C, 30 m × 0.25 mm × 0.25 μm

- Column flow rate: 1.2 ml/minute

  - 50°C (5 minutes), 10/minute 150°C (1 minute), 10/minute 280°C (12 minutes)

3. MS: Agilent 5977A

- Ion source temperature: 230°C
- Interface temperature: 280°C
- Captured at 120°C for 30 minutes

**Evaluation Example 2: Tensile strength (TS), $F_{100}$, Young's module ($YM_{100}$), and elongation at break (Eb)**

The biodegradable polyester sheets prepared in the Examples or Comparative Examples were each cut to prepare a specimen in accordance with ASTM D638 V-type. It was then measured using INSTRON's universal testing machine (UTM, model name 4206-001) at a tensile speed of 100 mm/minute and calculated by the program built in the equipment for the tensile strength ($kgf/mm^2$ = 9.8 MPa), $F_{100}$ ($kgf/mm^2$ = 9.8 MPa), Young's module (YM100), and elongation at break (%).

**Evaluation Example 3: Forming depth ($FD_{80}$)**

Each biodegradable polyester film having a width of 5 cm, a length of 5 cm, and a thickness of 50 μm prepared in the Examples and Comparative Examples was subjected to thermal pressing with a thermoforming press (Youngjin Eng) at 80°C for 30 seconds, and the forming depth (cm) of the forming process was measured.

Referring to Figs. 3a and 3b, the thermoforming press (1) comprises a lower plate (10) and an upper plate (20), wherein the lower plate (10) comprises cavities (11 to 15) with sequentially varying depths ($D_{s1}$ to $D_{s5}$) of 1 cm, 3 cm, 5 cm, 7 cm, and 10 cm, and the upper plate (20) comprises protrusions (21 to 25) with sequentially varying lengths ($D_{s1}$ to $D_{s5}$) of 1 cm, 3 cm, 5 cm, 7 cm, and 10 cm, corresponding to the cavities (11 to 15) of the lower plate (10).

Here, since the cavities (11 to 15) of the lower plate (10) have a mold and a heat source is equipped in the mold, the polyester film (50) may be molded in conformity to the mold when the polyester film (50) is placed between the lower plate (10) and the upper plate (20) and thermally pressed by the press.

In addition, referring to Fig. 4, in light of the thickness of the polyester film (50), the cavities of the lower plate are designed such that its base is a square with a length ($d_s$) on one side of about 10.3 mm and/or a circle with a diameter ($d_c$) of about 10.3 mm.

Since the upper plate (20) has a shape of 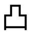, and the lower plate (10) has a shape of 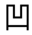 in the thermoforming press (1), the polyester film (50) was placed between the lower plate (10) and the upper plate (20) and thermally pressed at about 80°C for about 30 seconds. Then, the forming depth ($FD_{80}$), which is the depth (cm) to which the polyester film (50) had been molded without tearing or breakage, was measured.

**Evaluation Example 4: Number of pinholes (PR)**

Each biodegradable polyester film having a width of 15 cm, a length of 200 cm, and a thickness of 50 μm prepared from the biodegradable polyester resins in the Examples and Comparative Examples was subjected to rotation and reciprocation 1,300 times at a rotation angle of 420° for 30 minutes at room temperature using a Gelbo Flex, the film was then flatly placed on a blank paper, an oily ink was applied on the film using a doctor blade, and the film was removed. The number of ink dots appearing on the blank paper, which indicates the number of pinholes, was counted. Each sample was measured 3 times to obtain an average value.

The specific conditions were as follows.

Instrument name: IDM Instruments, Gelbo Flex Tester, Model: G0002
Cycles per minute: 45 cycles/minute
Sample length: 200 mm
90 mm: twist, 65 mm: straight
Pinhole count: 150 mm × 150 mm

**Evaluation Example 5: Melt index (MI)**

Each biodegradable polyester resin was measured for a melt index (g/10 minute) at a temperature of 190°C

and a load of 2.16 kg according to ASTM D1238.

The specific conditions were as follows.

Device name: Melt Flow Index (WL 1400, WithLab)
Measurement range: 40 to 300°C, precision: ±1°C

**Evaluation Example 6: Thermal shrinkage rate ($S_{80}$)**

The biodegradable polyester films prepared in the Examples and Comparative Examples were each cut into 150 mm in length and 2 cm in width regardless of the direction to prepare a specimen. The initial length thereof at room temperature and the length of the biodegradable polyester film specimen after it had been left for 5 minutes in a hot air oven at 80°C were measured to calculate a thermal shrinkage rate ($S_{80}$) according to the following Equation 3.

[Equation 3]

$$\text{Thermal shrinkage rate } (S_{80}) = \frac{L_{25} - L_{80}}{L_{25}} \times 100\ (\%)$$

In Equation 3, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

**Evaluation Example 7: Post-workability (PW)**

The values of the number of pinholes (PR) and the forming depth ($FD_{80}$) measured in Evaluation Examples 3 and 4 above were used to calculate the post-workability (PW) represented by the following Equation 1:

[Equation 1]

$$\text{Post-workability (PW, \%)} = \frac{FD_{80}}{PR} \times 100\ (\%)$$

In Equation 1, $FD_{80}$ is the forming depth (cm), excluding the unit, measured by subjecting a biodegradable polyester film having a width of 5 cm, a length of 5 cm, and a thickness of 50 μm prepared from the biodegradable polyester resin to thermal pressing with a thermoforming press at 80°C for 30 seconds, and

PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

**Evaluation Example 8: Thermal resistance ductility complexity (TRDC)**

The values of the elongation at break (Eb), thermal shrinkage rate ($S_{80}$), and post-workability (PW) measured in Evaluation Examples 2, 6, and 7 above were used to calculate the thermal resistance ductility complexity (TRDC) represented by the following Equation 2:

[Equation 2]

$$\text{Thermal resistance ductility complexity (TRDC)} = \frac{PW + Eb}{S_{80}}$$

In Equation 2, PW is as described above,

Eb refers to the elongation at break (%), excluding the unit, measured by cutting a biodegradable polyester sheet prepared from the biodegradable polyester resin to prepare a specimen in accordance with ASTM D638 V-type

and testing the specimen at a tensile speed of 100 mm/minute using a universal test machine (UTM), and

$S_{80}$ refers to the thermal shrinkage rate ($S_{80}$) represented by Equation 3,

[Equation 3]

$$\text{Thermal shrinkage rate } (S_{80}) = \frac{L_{25} - L_{80}}{L_{25}} \times 100\ (\%)$$

In Equation 3, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

[Table 1]

| | | Range | Example | | | | | | | | Comparative Example | | | |
|---|---|---|---|---|---|---|---|---|---|---|---|---|---|---|
| | | | 1 | 2 | 3 | 4 | 5 | 6 | 7 | 8 | 1 | 2 | 3 | 4 |
| Resin | Component | | PBAT | PBAT | PBAT | PBAT | PBAT /CNC | PBAT | PBAT | PBAT | PBAT | PBAT | PBAT | PBAT |
| | 1,4-BDO (% by mole) | | 48/52 | 48/52 | 48/52 | 100 | 48/52 | 100 | 48/52 | 100 | 60/40 | 48/52 | 100 | 100 |
| | TPA/AA (% by mole) | | 48/52 | 48/52 | 48/52 | 50/50 | 48/52 | 50/50 | 48/52 | 70/30 | 60/40 | 48/52 | 50/50 | 50/50 |
| | Softener type | Formula 1 | DEHP | DEHP | DBP | DEHP | DBP | DBP | DEHP | DEHP | PTMEG (MW 800) | DEHP | DEHP | DBP |
| | Content of softener in the resin | 50-800 | 50 | 100 | 300 | 600 | 600 | 600 | 800 | 600 | 600 | 20 | 1,500 | 2,000 |
| | Softener properties (polarity) | 7-22 | 18.7 | 18.7 | 19.0 | 18.7 | 19.0 | 19.0 | 18.7 | 18.7 | 6.0 | 18.7 | 18.7 | 19.0 |
| | CNC (ppm) | | - | - | - | - | 800 | - | - | - | - | - | - | - |
| | Number of first repeat unit (X) | 90-500 | 102 | 102 | 109 | 114 | 91.2 | 95.0 | 109 | 133 | 137 | 102 | 114 | 95.0 |
| | Number of second repeat unit (Y) | 50-500 | 111 | 111 | 119 | 114 | 98.8 | 95.0 | 119 | 57 | 92 | 111 | 114 | 95.0 |
| | X/Y | 0.6-2.5 | 0.92 | 0.92 | 0.92 | 1.00 | 0.92 | 1.00 | 0.92 | 2.33 | 1.49 | 0.92 | 1.00 | 1.00 |
| Process | Step of softener addition | | ES | ES | ES | ES | ES | PC | ES | ES | ES | ES | PC | ES |

[Table 2]

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Physical properties | Mn (g/mole) | 45,000 | 45,000 | 48,000 | 48,000 | 40,000 | 40,000 | 48,000 | 40,000 | 48,000 | 45,000 | 48,000 | 40,000 |
| | Young's modulus ($YM_{100}$) ($kgf/mm^2$) | 7.2 | 6.0 | 4.1 | 2.3 | 2.6 | 4.5 | 0.98 | 14.7 | 15.0 | 10.1 | 9.5 | 8.7 |
| | $F_{100}$ ($kgf/mm^2$) | 0.95 | 0.83 | 0.68 | 0.51 | 0.56 | 0.69 | 0.49 | 1.50 | 1.70 | 1.35 | 1.21 | 1.19 |
| | Elongation at break (Eb) (%) | 700 | 730 | 800 | 850 | 850 | 740 | 890 | 400 | 450 | 400 | 490 | 490 |
| | Forming depth ($FD_{80}$) (cm) | 3.5 | 4.1 | 4.9 | 5.4 | 5.3 | 4.1 | 7.2 | 2.1 | 1.9 | 1.1 | 1.5 | 1.8 |
| | Thermal shrinkage rate ($S_{80}$) (%) [Eq. 3] | 40 | 42 | 43 | 45 | 42 | 42 | 47 | 28 | 45 | 39 | 42 | 46 |
| | Number of pinholes (PR) | 13 | 10 | 9 | 6 | 6 | 13 | 3 | 14 | 20 | 16 | 22 | 20 |
| | Melt index (g/10 min.) | 4 | 4.1 | 3.8 | 3.9 | 5.1 | 5.0 | 4.1 | 5.1 | 3.8 | 4.2 | 4.0 | 4.2 |
| | PW (%) [Eq. 1] | 26.9 | 41.0 | 54.4 | 90.0 | 88.3 | 31.5 | 240.0 | 15.0 | 9.5 | 6.9 | 6.8 | 9.0 |
| | TRDC [Eq. 2] | 18.2 | 18.4 | 19.9 | 20.9 | 22.3 | 18.4 | 24.0 | 14.8 | 10.2 | 10.4 | 11.8 | 10.8 |

[Equation 1] Post-workability (PW, %) = $\frac{FD_{80}}{PR} \times 100$ (%)

[Equation 2] Thermal resistance ductility complexity (TRDC) = $\frac{PW + Eb}{S_{80}}$

[Equation 3] Thermal shrinkage rate ($S_{80}$) = $\frac{L_{25} - L_{80}}{L_{25}} \times 100$ (%)

As can be seen from Tables 1 and 2 above, the polyester resins of Examples 1 to 8, comprising a first repeat unit comprising a first diol residue and an aromatic dicarboxylic acid residue and a second repeat unit comprising a second diol residue and an aliphatic dicarboxylic acid residue; and DEHP or DBP as a softener represented by Formula 1, had high flexibility while maintaining excellent strength and thermal resistance, as compared with Comparative Examples 1 to 4. It was possible to achieve such composite physical properties as post-workability (PW) and thermal resistance ductility complexity (TRDC), which are obtained by controlling the above properties in combination, at an optimal level.

Specifically, when the biodegradable polyester resins of Examples 1 to 8 were used, in which DEHP or DBP as a softener was employed, the Young's moduli were all less than 15 kgf/mm$^2$, $F_{100}$ was 1.50 kgf/mm$^2$ or less, and the elongation at break was mostly 500% or more, all of which was very excellent, the number of pinholes was 15 or fewer, the forming depth was 2.1 to 5.4 cm, so that the flexibility was very excellent.

In contrast, when the biodegradable polyester resin of Comparative Example 1 was used, in which polytetramethylene ether glycol (PTMEG) was employed as a softener, the physical properties such as Young's modulus, $F_{100}$, elongation at break, forming depth, and number of pinholes were significantly deteriorated overall.

Meanwhile, it was confirmed that even if the softener represented by Formula 1 was employed, the physical properties varied depending on the content of the softener contained in the polyester resin.

Specifically, when the biodegradable polyester resin of Comparative Example 2 was used, in which the content of the softener was 20 ppm, the elongation at break, forming depth, and number of pinholes were significantly deteriorated as compared with the polyester resins of Examples 1 to 8. When the biodegradable polyester resins of Comparative Examples 3 and 4 were used, in which the content of the softener was 1,500 ppm and 20,000 ppm, respectively, the number of pinholes was significantly increased, and the forming depth was decreased, as compared with the polyester resins of Examples 1 to 8.

[Explanation of Reference Numerals]

1: thermoforming press
10: lower plate
20: upper plate
50: biodegradable polyester film
11 to 15: cavities of the lower plate
21 to 25: protrusions of the upper plate
$D_{s1}$ to $D_{s5}$: forming depth of the cavities of the lower plate or the length of the protrusions of the upper plate
$D_{s1}$: forming depth of the cavities of the lower plate (bottom: square)
$D_{c1}$: forming depth of the cavities of the lower plate (bottom: circle)
$d_{su}$: diameter of the protrusions of the upper plate
$d_{sd}$: diameter of the cavities of the upper plate
$d_s$: length on one side (square)
$d_c$: diameter of circle

## Claims

1. A biodegradable polyester resin, which comprises a first repeat unit comprising a first diol residue and an aromatic dicarboxylic acid residue, and a second repeat unit comprising a second diol residue and an aliphatic dicarboxylic acid residue; and a softener represented by the following Formula 1 in an amount of 50 ppm to 800 ppm:

[Formula 1]

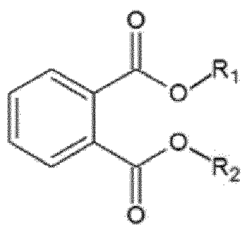

in Formula 1, $R_1$ and $R_2$ are each independently a substituted or unsubstituted $C_2$-$C_{10}$ alkyl group.

2. The biodegradable polyester resin of claim 1, wherein $R_1$ and $R_2$ are each independently a $C_4$-$C_8$ alkyl group unsubstituted or substituted with a $C_1$-$C_4$ alkyl group.

3. The biodegradable polyester resin of claim 1, wherein the softener has a weight average molecular weight (Mw) of 200 to 600 g/mole and a polarity of 7 to 22.

4. The biodegradable polyester resin of claim 1, wherein the post-workability (PW) represented by the following Equation 1 is 10% or more:

[Equation 1]

$$\text{Post-workability (PW, \%)} = \frac{FD_{80}}{PR} \times 100\ (\%)$$

in Equation 1, $FD_{80}$ is the forming depth (cm), excluding the unit, measured by subjecting a biodegradable polyester film having a width of 5 cm, a length of 5 cm, and a thickness of 50 μm prepared from the biodegradable polyester resin to thermal pressing with a thermoforming press at 80°C for 30 seconds, and
PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

5. The biodegradable polyester resin of claim 4, wherein the biodegradable polyester resin has a thermal resistance ductility complexity (TRDC) of 12 or more as represented by Equation 2:

[Equation 2]

$$\text{Thermal resistance ductility complexity (TRDC)} = \frac{PW + Eb}{S_{80}}$$

in Equation 2, PW is as defined in claim 4,
Eb refers to the elongation at break (%), excluding the unit, measured by cutting a biodegradable polyester sheet prepared from the biodegradable polyester resin to prepare a specimen in accordance with ASTM D638 V-type and testing the specimen at a tensile speed of 100 mm/minute using a universal test machine (UTM), and
$S_{80}$ refers to the thermal shrinkage rate ($S_{80}$) represented by Equation 3,

[Equation 3]

$$\text{Thermal shrinkage rate } (S_{80}) = \frac{L_{25} - L_{80}}{L_{25}} \times 100\ (\%)$$

in Equation 3, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

6. The biodegradable polyester resin of claim 4, wherein the forming depth ($FD_{80}$) is 2 cm or more, and the number of pinholes (PR) is 15 or fewer.

7. The biodegradable polyester resin of claim 1, wherein when a biodegradable polyester sheet prepared from the biodegradable polyester resin is cut to prepare a specimen in accordance with ASTM D638 V-type, and the specimen is tested at a tensile speed of 100 mm/minute using a universal test machine (UTM), the Young's modulus ($YM_{100}$)

is 0.1 kgf/mm$^2$ to less than 15.0 kgf/mm$^2$, the $F_{100}$ is 0.01 kgf/mm$^2$ to less than 1.7 kgf/mm$^2$, and the elongation at break (Eb) is 500% or more.

**8.** The biodegradable polyester resin of claim 1, wherein the first and second diol residues each comprise a residue of 1,4-butanediol, 1,2-ethanediol, 1,3-propanediol, or a derivative thereof,

the aromatic dicarboxylic acid residue comprises a residue of terephthalic acid, dimethyl terephthalate, or a derivative thereof,
the aliphatic dicarboxylic acid residue comprises a residue of adipic acid, succinic acid, sebacic acid, or a derivative thereof, and
the ratio (X/Y) of the number of the first repeat unit (X) to the number of the second repeat unit (Y) is 0.6 to 2.5.

**9.** The biodegradable polyester resin of claim 1, wherein the biodegradable polyester resin comprises at least one nanocellulose selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

**10.** A process for preparing a biodegradable polyester resin, which comprises:

a first step of mixing a diol component and an aromatic dicarboxylic acid to obtain a slurry;
a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and
a third step of subjecting the prepolymer to a polycondensation reaction,
wherein the biodegradable polyester resin comprises a first repeat unit comprising a first diol residue and an aromatic dicarboxylic acid residue, and a second repeat unit comprising a second diol residue and an aliphatic dicarboxylic acid residue; and a softener represented by the following Formula 1 in an amount of 50 ppm to 800 ppm:

[Formula 1]

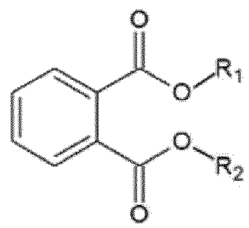

in Formula 1, $R_1$ and $R_2$ are each independently a substituted or unsubstituted $C_2$-$C_{10}$ alkyl group.

**11.** A biodegradable polyester film, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue; and a softener represented by the following Formula 1 in an amount of 50 ppm to 800 ppm:

[Formula 1]

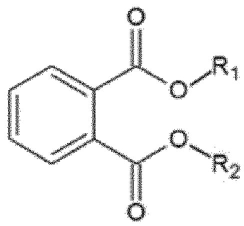

in Formula 1, $R_1$ and $R_2$ are each independently a substituted or unsubstituted $C_2$-$C_{10}$ alkyl group.

[Fig. 1]

(a) Polar segment
(b) Non-polar segment

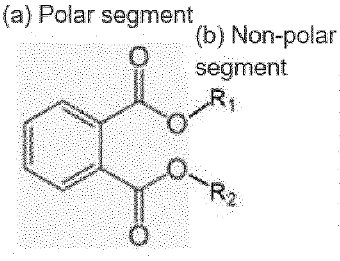

Formula 1

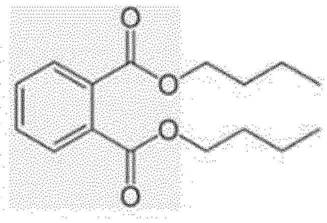

Formula 1-1
**DBP**

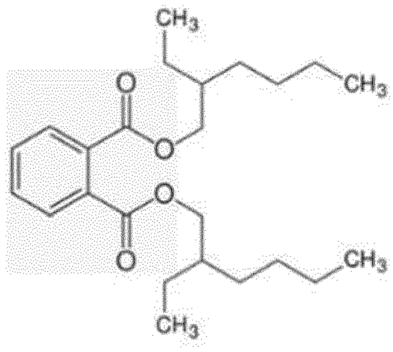

Formula 1-2
**DEHP**

[Fig. 2]

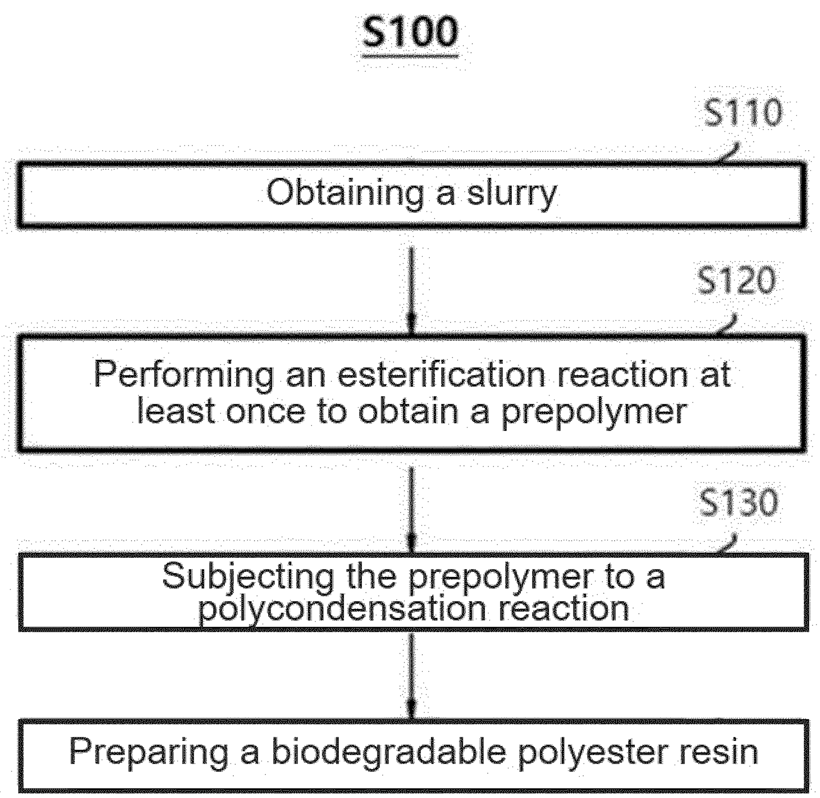

[Fig. 3a]

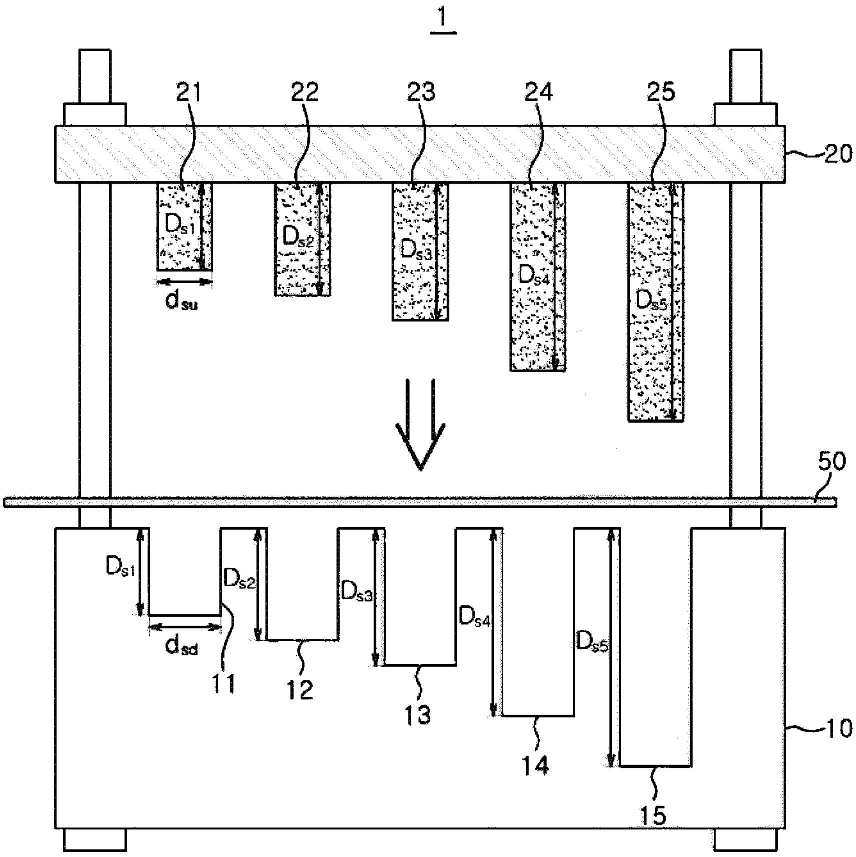
1
21
22
23
24
25
20
Ds1
Ds2
Ds3
Ds4
Ds5
dsu
50
Ds1
Ds2
Ds3
Ds4
Ds5
dsd
11
12
13
14
15
10

[Fig. 3b]

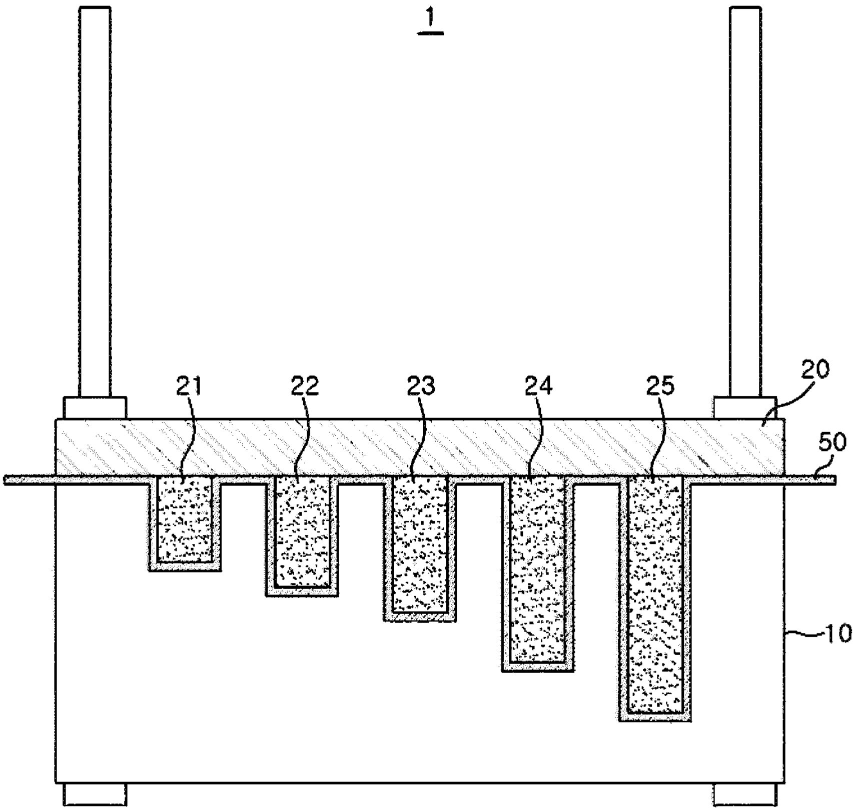

[Fig. 4]

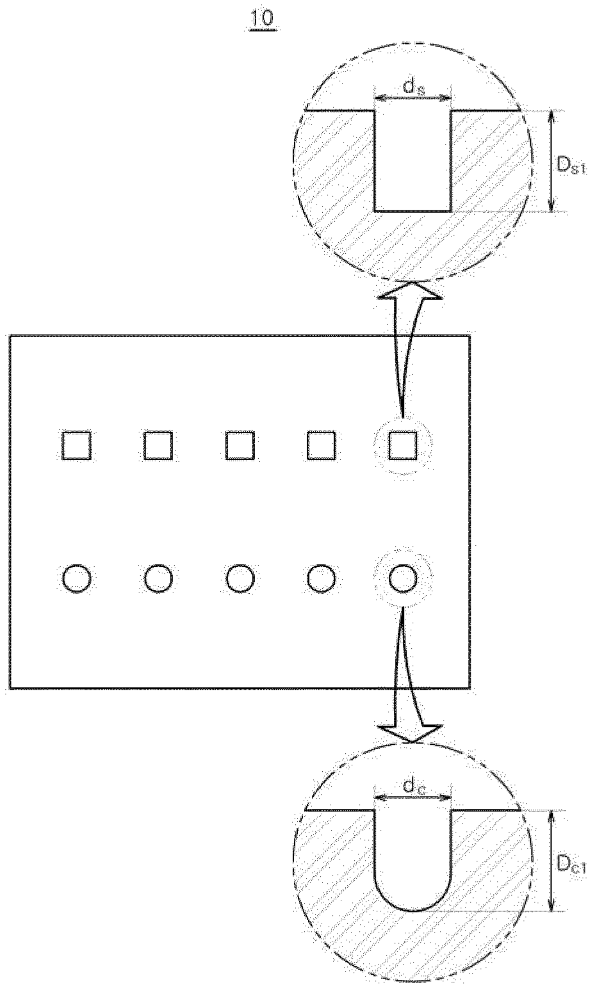

## INTERNATIONAL SEARCH REPORT

International application No.
**PCT/KR2022/016107**

### A. CLASSIFICATION OF SUBJECT MATTER

**C08G 63/16**(2006.01)i; **C08G 63/181**(2006.01)i; **C08K 5/12**(2006.01)i; **C08L 67/02**(2006.01)i; **C08L 1/02**(2006.01)i; **C08J 5/18**(2006.01)i

According to International Patent Classification (IPC) or to both national classification and IPC

### B. FIELDS SEARCHED

Minimum documentation searched (classification system followed by classification symbols)

C08G 63/16(2006.01); C08G 63/12(2006.01); C08G 63/672(2006.01); C08L 23/02(2006.01); C08L 67/02(2006.01); C08L 67/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르 (polyester), 디-2-에틸헥실프탈레이트 (di-2-ethylhexylphthalate), 생분해성 수지 (biodegradable resin)

### C. DOCUMENTS CONSIDERED TO BE RELEVANT

| Category* | Citation of document, with indication, where appropriate, of the relevant passages | Relevant to claim No. |
|---|---|---|
| Y | KR 10-2006-0075724 A (NPI CO., LTD.) 04 July 2006 (2006-07-04)<br>See paragraphs [0001], [0048] and [0049]. | 1-11 |
| Y | KR 10-1992-0012166 A (SUNKYONG IND. CO., LTD.) 25 July 1992 (1992-07-25)<br>See claims 1-3. | 1-11 |
| Y | KR 10-2021-0057244 A (SAMYANG CORPORATION) 21 May 2021 (2021-05-21)<br>See claims 2, 4 and 5; and paragraphs [0009], [0012] and [0017]. | 9 |
| A | KR 10-2001-0055721 A (IRE CHEMICAL LTD.) 04 July 2001 (2001-07-04)<br>See claims 1-9. | 1-11 |
| A | JP 2011-516670 A (LAPOL LLC.) 26 May 2011 (2011-05-26)<br>See entire document. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2023** | **01 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/016107**

| Patent document cited in search report | Publication date (day/month/year) | Patent family member(s) | Publication date (day/month/year) |
|---|---|---|---|
| KR 10-2006-0075724 A | 04 July 2006 | None | |
| KR 10-1992-0012166 A | 25 July 1992 | None | |
| KR 10-2021-0057244 A | 21 May 2021 | KR 10-2438607 B1 | 01 September 2022 |
| KR 10-2001-0055721 A | 04 July 2001 | EP 1106640 A2 | 13 June 2001 |
| | | EP 1106640 A3 | 16 January 2002 |
| | | JP 2001-187818 A | 10 July 2001 |
| | | US 2001-0007899 A1 | 12 July 2001 |
| | | US 6713595 B2 | 30 March 2004 |
| JP 2011-516670 A | 26 May 2011 | BR PI0911331 A2 | 06 October 2015 |
| | | CN 102046694 A | 04 May 2011 |
| | | CN 102046694 B | 11 September 2013 |
| | | EP 2265662 A1 | 29 December 2010 |
| | | US 2009-0253871 A1 | 08 October 2009 |
| | | US 7842761 B2 | 30 November 2010 |
| | | WO 2009-146109 A1 | 03 December 2009 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20140106882